# EUROPÄISCHE PATENTSCHRIFT

(11) **EP 4 185 760 B1**
(45) Veröffentlichungstag und Bekanntmachung des Hinweises auf die Patenterteilung: **16.07.2025**
(21) Anmeldenummer: 21748612.5
(22) Anmeldetag: 21.07.2021
(51) Int. Cl.: E05F 3/12, F16F 9/02

(54) **ANTRIEBSANORDNUNG FÜR EINE KLAPPE EINES KRAFTFAHRZEUGS**
DRIVE ARRANGEMENT FOR A FLAP OF A MOTOR VEHICLE
DISPOSITIF D'ENTRAÎNEMENT POUR UN VOLET D'UN VÉHICULE À MOTEUR

(30) Priorität: 21.07.2020 DE 102020119230
(43) Veröffentlichungstag der Anmeldung: 31.05.2023
(73) Patentinhaber: Brose Fahrzeugteile SE & Co. Kommanditgesellschaft, Bamberg, 96052 Bamberg (DE); SUSPA GmbH, 90518 Altdorf (DE)
(72) Erfinder: WITTELSBÜRGER, Michael, 96052 Bamberg (DE); FRANKE, Clemens, 96049 Bamberg (DE); RAMSAUER, Sebastian, 90763 Fürth (DE); CRUZ, Patricía, 96050 Bamberg (DE); LÖSCHER, Roland, 91058 Erlangen (DE); ZUO, Waldon, Jiangsu RC21113 (CN)
(74) Vertreter: Gottschald Patentanwälte Partnerschaft mbB
(86) Internationale Anmeldenummer: PCT/EP2021/070431
(87) Internationale Veröffentlichungsnummer: WO 2022/018157

(56) Entgegenhaltungen:
- EP-A2- 1 111 266
- DE-A1- 102018 122 135
- DE-B- 1 149 271
- DE-C1- 19 706 919
- US-B2- 6 557 924

## Beschreibung

Die Erfindung betrifft eine Antriebsanordnung für eine Klappe, insbesondere Heckklappe, eines Kraftfahrzeugs gemäß dem Oberbegriff von Anspruch 1, eine Antriebsanordnung für eine Klappe, insbesondere Heckklappe, eines Kraftfahrzeugs gemäß dem Oberbegriff von Anspruch 15 sowie eine Klappenanordnung mit einer Klappe, insbesondere Heckklappe, und einer solchen Antriebsanordnung gemäß Anspruch 16.

Die in Rede stehende Antriebsanordnung findet Anwendung im Rahmen der insbesondere motorischen Verstellung jedweder Klappen eines Kraftfahrzeugs. Bei solchen Klappen kann es sich beispielsweise um Heckklappen, Heckdeckel, Motorhauben, Laderaumböden, aber auch um Türen eines Kraftfahrzeugs handeln. Insoweit ist der Begriff "Klappe" vorliegend weit zu verstehen.

Die bekannte Antriebsanordnung (DE 10 2018 122 135 A1), von der die Erfindung ausgeht, dient der motorischen Verstellung einer Heckklappe eines Kraftfahrzeugs. Die Antriebsanordnung weist an einer Seite der Heckklappe einen motorischen Antrieb in Form eines Spindelantriebs auf, der eine elektrische Antriebseinheit und ein der elektrischen Antriebseinheit antriebstechnisch nachgeschaltetes Spindel-Spindelmuttergetriebe aufweist, mit dem lineare Antriebsbewegungen zwischen einem karosserieseitigen Antriebsanschluss und einem klappenseitigen Antriebsanschluss zum Öffnen und Schließen der Klappe erzeugt werden. In einer Offenstellung der Klappe befindet sich der Spindelantrieb in einer ausgefahrenen Stellung, wohingegen sich der Spindelantrieb in einer Schließstellung der Klappe in einer eingefahrenen Stellung befindet.

Da die Gewichtskraft der Heckklappe von beträchtlicher Größe sein kann, ist separat von dem Spindelantrieb auf der anderen Seite der Klappe ein Gasdruckelement in Form einer Gasfeder angeordnet, das die Gewichtskraft der Heckklappe kompensieren soll. Damit soll in der Regel erreicht werden, dass sich die Heckklappe stets in der Nähe des Gleichgewichtszustands befindet oder in Öffnungsrichtung gedrängt wird. Bei einer solchen Klappenanordnung mit einem motorischen Antrieb auf der einen Seite und einem Gasdruckelement, hier einer Gasfeder, auf der anderen Seite der Klappe spricht man auch von einem Aktiv/Passiv-System.

Das Gasdruckelement der bekannten Antriebsanordnung ist insoweit vorteilhaft, als es über eine schaltbare Ventilanordnung in einem Fall, wenn die Antriebskraft und/oder Haltekraft des Antriebs ausfällt und dadurch die Klappe federkraftbedingt und/oder gravitationsbedingt in Schließrichtung drängt, die Ventilanordnung in einen Schließzustand schaltet, der einer weiteren Verstellung der Klappe entgegenwirkt und insbesondere eine weitere Verstellung der Klappe blockiert. Das Umschalten in den Schließzustand erfolgt druckabhängig, also abhängig vom Druckgefälle zwischen den beiden Teilräumen in dem Gasdruckelement, was wiederum abhängig von der Kolbengeschwindigkeit, also der Geschwindigkeit des Kolbens relativ zum Zylinder des Gasdruckelements, ist. Bei einer hohen eingeleiteten Kraft und daraus resultierenden, hohen Kolbengeschwindigkeit und einem Blockieren des Gasdruckelements kann allerdings der Druck in dem einen der beiden vom Kolben unterteilten Teilräume des Gasdruckelements unter Umständen einen kritischen Druck übersteigen, was zu einer Beschädigung des Gasdruckelements führen kann. Weitere Antriebsanordnungen sind aus der US 6557924 B2, der DE102018122135 A1 und der DE 19706919 C1 bekannt.

Der Erfindung liegt das Problem zu Grunde, die bekannte Antriebsanordnung derart auszugestalten und weiterzubilden, dass Beschädigungen am Gasdruckelement möglichst verhindert werden.

Das obige Problem wird bei einer Antriebsanordnung gemäß dem Oberbegriff von Anspruch 1 durch die Merkmale des kennzeichnenden Teils von Anspruch 1 gelöst.

Zunächst ist hier mit einem Gasdruckelement ganz allgemein ein Element mit einem Zylinder und einem darin koaxial zu dessen Zylinderachse geführten Kolben gemeint, das im bewegungslosen und/oder im sich bewegenden Zustand des Kolbens relativ zum Zylinder einen pneumatischen und/oder hydraulischen Druck, insbesondere einen statischen und/oder dynamischen Druck, zwischen dem Zylinder und dem Kolben des Gasdruckelements bereitstellt. Der Zylinder ist dabei mit mindestens einem Fluid, insbesondere einem Gas und/oder einer Flüssigkeit, gefüllt, wobei das Gas und/oder die Flüssigkeit unter Druck, also mit einem Druck oberhalb oder unterhalb des Umgebungsdrucks, oder drucklos, also mit einem im Wesentlichen dem Umgebungsdruck entsprechenden Druck, in den Zylinder gefüllt sein kann. Vorzugsweise wird das Gasdruckelement allein von einer Gasfeder, insbesondere Gasdruck- oder Gaszugfeder, gebildet, also einer Zylinder-Kolben-Anordnung, bei der der Kolben mit einem unter Druck, insbesondere Überdruck, stehenden Fluid gefüllt ist. Das Gasdruckelement kann auch von einem Gasdämpfer gebildet sein, also einer Zylinder-Kolben-Anordnung, bei der der Kolben mit einem drucklosen Fluid gefüllt ist. Das Gasdruckelement kann auch als einen Bestandteil eine solche Zylinder-Kolben-Anordnung, insbesondere eine Gasfeder und/oder einen Gasdämpfer, und zusätzlich als weiteren Bestandteil eine parallel oder koaxial zur Zylinderachse und somit Wirkungsrichtung des Gasdruckelements bzw. der Gasfeder oder des Gasdämpfers wirkende Antriebsfederanordnung aufweisen. Insofern sind die Begriffe "Gasdruckelement", "Gasfeder" und "Gasdämpfer" also weit zu verstehen.

Im Normalbetrieb funktioniert die Gasfeder bzw. der Gasdämpfer des vorschlagsgemäß vorgesehenen Gasdruckelements wie eine herkömmliche Gasfeder bzw. ein herkömmlicher Gasdämpfer, die bzw. der in an sich üblicher Weise einen fluidgefüllten, insbesondere gas- und/oder flüssigkeitsgefüllten, Zylinder und einen im Zylinder geführten Kolben aufweist. So nutzt das Gasdruckelement die Komprimierbarkeit des eingefüllten Fluids, insbesondere Gases, für dessen federnde bzw. dämpfende Wirkung. Bei einer Gasfeder drückt, wenn keine Kraft eingeleitet wird, das unter Druck stehende Fluid auf die Querschnittsfläche des Kolbens und treibt dadurch den zylinderseitigen Antriebsanschluss und den kolbenseitigen Antriebsanschluss, über die die Gasfeder jeweils mit dem Fahrzeug gekoppelt sind, auseinander. Wird von außen über die Antriebsanschlüsse eine bestimmte Mindestdruckkraft, beispielsweise durch eine manuelle oder über einen motorischen Antrieb bewirkte Betätigung der Heckklappe, in die Gasfeder eingeleitet, werden die beiden Antriebsanschlüsse aufeinander zu getrieben. Bei einem Gasdämpfer, dessen Fluid also, wenn keine Kraft eingeleitet wird, drucklos ist, sind die Antriebsanschlüsse nur durch eine von außen über die Antriebsanschlüsse eingeleitete Druck- oder Zugkraft, beispielsweise durch eine manuelle oder über einen motorischen Antrieb bewirkte Betätigung der Heckklappe, relativ zueinander bewegbar, wodurch das Fluid über die Querschnittsfläche des Kolbens druckbeaufschlagt wird.

Der Kolben, insbesondere dessen auch als Kolbenkopf bezeichneter Grundkörper, unterteilt sowohl bei einer Gasfeder als auch bei einem Gasdämpfer den Zylinderinnenraum in zwei Teilräume, wobei eine Überströmkanalanordnung, die insbesondere zumindest zum Teil vom Grundkörper gebildet wird, bewirkt, dass das Fluid zum Ausgleich eines Druckgefälles zwischen den Teilräumen von dem einen Teilraum in den jeweils anderen Teilraum strömen kann. Die entsprechende Strömung wird im Weiteren als Ausgleichsströmung bezeichnet.

Nun kann bei Einleiten einer vergleichsweise großen Kraft in das Gasdruckelement, beispielsweise wenn die Antriebskraft und/oder Haltekraft des Antriebs ausfällt und dadurch die Klappe federkraftbedingt und/oder gravitationsbedingt in Schließrichtung drängt oder wenn der Benutzer die Klappe manuell schließt, die Kolbengeschwindigkeit ansteigen. Dabei kann es vorkommen, dass die Ausgleichsströmung nicht schnell genug durch den bisherigen Querschnitt der Überströmkanalanordnung von dem einen in den anderen Teilraum strömen kann, da der Querschnitt dafür zu klein ist. Dadurch steigt der Druck dann in dem einen der Teilräume und somit das Druckgefälle zwischen den beiden Teilräumen an.

Wesentlich ist nun die grundsätzliche Überlegung, dass eine schaltbare Ventilanordnung abhängig vom Druckgefälle zwischen den beiden Teilräumen, bevor ein kritischer Druck in dem einen der Teilräume entsteht, selbsttätig in einen Zustand umschaltet, der einen besonders schnellen Druckausgleich zwischen dem Teilraum mit dem hohen Druck und dem Teilraum auf der anderen Seite des Kolbens herbeizuführen. Dieser Zustand, in den die Ventilanordnung schaltet, wird im Weiteren als Überlastzustand bezeichnet. Auch wenn also hohe Kräfte in das Gasdruckelement eingeleitet werden und dadurch eine hohe Kolbengeschwindigkeit auftritt, kann das Gasdruckelement auf diese Weise vor einer Beschädigung oder gar Zerstörung optimal geschützt werden.

Im Normalbetrieb des Gasdruckelements findet, was im Weiteren noch erläutert wird, ebenfalls ein Druckausgleich zwischen den beiden durch den Kolben getrennten Teilräumen im Gasdruckelement statt, wobei eine den Druckausgleich erzeugende Ausgleichsströmung zwischen den beiden Teilräumen hierbei aber weniger groß als im Überlastzustand ist. Außerdem kann die Ventilanordnung, was ebenfalls im Weiteren noch erläutert wird, insbesondere noch in einen Zustand schalten, der die Ausgleichsströmung verringert, wenn sich der Druck in einem der Teilräume auf ein bestimmtes Maß erhöht. Dieser Zustand wird im Weiteren als Verengungszustand bezeichnet. Erhöht sich der Druck in diesem Teilraum daraufhin noch weiter, schaltet die Ventilanordnung dann in den besagten Überlastzustand. Es sei hervorgehoben, dass die Schaltvorgänge hier selbsttätig erfolgen, also ohne Zutun eines Benutzers und allein oder jedenfalls maßgeblich bedingt durch das Druckgefälle zwischen den beiden Teilräumen, das wiederum von der Kolbengeschwindigkeit abhängig ist.

Im Einzelnen wird vorgeschlagen, dass die Ventilanordnung bei Überschreiten eines vorbestimmten oberen Grenzwertes für das Druckgefälle selbsttätig in einen Überlastzustand schaltet, in dem sie den Querschnitt der Überströmkanalanordnung vergrößert, insbesondere maximiert.

Anspruch 2 definiert die Möglichkeit, dass der Querschnitt der Überströmkanalanordnung nach Überschreiten des vorbestimmten unteren Grenzwertes für das Druckgefälle und bis zum Erreichen des vorbestimmten oberen Grenzwertes für das Druckgefälle weiterhin geöffnet bleibt oder aber geschlossen wird.

Anspruch 3 definiert bevorzugte Kolbengeschwindigkeiten, bei denen die Ventilanordnung in den Verengungszustand und in den Überlastzustand schaltet.

Anspruch 4 betrifft den Offenzustand der Ventilanordnung, den die Ventilanordnung im Normalbetrieb des Gasdruckelements, aber auch im Ruhezustand des Gasdruckelements, einnimmt. Aus diesem Offenzustand schaltet die Ventilanordnung, wenn sich das Druckgefälle aufgrund einer zunehmenden Kolbengeschwindigkeit erhöht, zunächst in den Verengungszustand und, wenn sich das Druckgefälle dann aufgrund einer immer noch zunehmenden Kolbengeschwindigkeit noch weiter erhöht, weiter in den Überlastzustand.

In Anspruch 5 ist wiederum angegeben, wie sich die Ventilanordnung bevorzugt verhält, wenn das Druckgefälle wieder sinkt. So schaltet die Ventilanordnung dann aus dem Überlastzustand in den Verengungszustand und/oder aus dem Verengungszustand in den Offenzustand.

Anspruch 6 betrifft eine Antriebsfederanordnung, die vorzugsweise die Antriebsanschlüsse des Gasdruckelements, mit denen das Gasdruckelement an der Klappe einerseits und an der Kraftfahrzeugkarosserie andererseits befestigt ist, auseinandertreibt. Die Antriebsfederanordnung kann dabei auch eine Schraubenfeder, insbesondere innerhalb des Zylinders des Gasdruckelements, aufweisen, die als Pop-up-Feder nur über einen Teil der Bewegung des Kolbens im Zylinder der Kolbenbewegung entgegenwirkt und das Öffnen der Klappe aus der Schließstellung heraus erleichtern soll.

In Anspruch 7 ist angegeben, dass die Ventilanordnung bevorzugt in der Lage ist, im Überlastzustand das Druckgefälle, insbesondere schlagartig, zu verringern und dann selbsttätig in den Verengungszustand zu schalten, wodurch ein Einklemmen einer Person bei zufallender Klappe verhindert werden kann. Die Antriebsfederanordnung kann die Klappe dabei zusätzlich abbremsen, indem die Federkraft mit einer Verringerung des Abstands der beiden Antriebsanschlüsse zueinander ansteigt, wodurch über die Federkraft ein Moment erzeugt wird, dass der Schließbewegung der Klappe entgegenwirkt (Anspruch 8). Vorzugsweise geschieht dies derart, dass bei der Schließbewegung der Klappe eine Verringerung des kürzesten senkrechten Abstands zwischen der Schwenkachse der Klappe und der Wirkungslinie der Federkraft zumindest teilweise kompensiert wird.

Die Ansprüche 9 und 10 betreffen den grundsätzlichen Aufbau der Ventilanordnung und definieren insbesondere einen Ventilkörper, der gegenüber dem Grundkörper des Kolbens, abhängig vom Druckgefälle und der Kolbengeschwindigkeit, verlagerbar ist.

Besonders bevorzugte Ausgestaltungen der Überströmkanalanordnung und insbesondere des Ventilkörpers und des Grundkörpers sind Gegenstand der Ansprüche 11 bis 13.

Nach der ebenfalls bevorzugten Ausgestaltung gemäß Anspruch 14 ist der Ventilkörper, insbesondere über eine Ventilfederanordnung, gegenüber dem Grundkörper jedenfalls in seiner mindestens einen Verengungsstellung und Überlaststellung kraftbeaufschlagt, vorzugsweise zu seiner mindestens einen Offenstellung hin.

Nach einer weiteren Lehre gemäß Anspruch 15, der eigenständige Bedeutung zukommt, wird eine Antriebsanordnung für eine Klappe, insbesondere Heccklappe, eines Kraftfahrzeugs mit mindestens einem Gasdruckelement, insbesondere mit einer Gasfeder, beansprucht, wobei das Gasdruckelement einen nach außen gedichteten Zylinder und einen in dem Zylinderinnenraum entlang der Zylinderachse laufenden, den Zylinderinnenraum in zwei Teilräume unterteilenden Kolben aufweist, wobei das Gasdruckelement einen ersten Antriebsanschluss, der mit dem Zylinder verbunden ist, und einen zweiten Antriebsanschluss, der mit dem Kolben verbunden ist, aufweist, wobei der Zylinder mit einem, insbesondere unter Druck stehenden, Fluid gefüllt ist, wobei der Kolben eine Überströmkanalanordnung aufweist, durch die auf eine Kolbenbewegung zum Ausgleich eines Druckgefälles zwischen den beiden Teilräumen eine Ausgleichsströmung zwischen den beiden Teilräumen entsteht, und wobei dem Kolben eine schaltbare Ventilanordnung zugeordnet ist, die abhängig vom Druckgefälle zwischen den beiden Teilräumen in unterschiedliche Durchströmungszustände bringbar ist, die sich in der Größe des Querschnitts der Überströmkanalanordnung unterscheiden. Auf alle Ausführungen zu der vorschlagsgemäßen Antriebsanordnung gemäß der ersten Lehre darf verwiesen werden.

Wesentlich hierbei ist, dass die Ventilanordnung bei Überschreiten eines vorbestimmten unteren Grenzwertes für das Druckgefälle selbsttätig von einem Offenzustand in einen Verengungszustand schaltet, in dem sie den Querschnitt der Überströmkanalanordnung gegenüber dem Offenzustand verringert, und bei Überschreiten eines vorbestimmten oberen Grenzwertes für das Druckgefälle selbsttätig von dem Verengungszustand in einen Schließzustand schaltet, in dem sie den Querschnitt der Überströmkanalanordnung gegenüber dem Verengungszustand verringert. Der Querschnitt wird hierbei also ausgehend von dem Offenzustand zunächst ebenfalls, wie bei der ersten Lehre, im Verengungszustand verringert, anschließend aber, anders als bei der ersten Lehre, in einem Schließzustand noch weiter verringert.

Nach einer weiteren Lehre gemäß Anspruch 16, der ebenfalls eigenständige Bedeutung zukommt, wird eine Klappenanordnung als solche beansprucht, die eine Klappe, insbesondere Heckklappe, und eine der Klappe zugeordnete, vorschlagsgemäße Antriebsanordnung aufweist. Auf alle Ausführungen zu der vorschlagsgemäßen Antriebsanordnung gemäß der ersten Lehre und zu der vorschlagsgemäßen Antriebsanordnung gemäß der zweiten Lehre darf verwiesen werden.

Die Klappe ist dabei bevorzugt um eine Schwenkachse schwenkbar, die im montierten Zustand im Wesentlichen horizontal ausgerichtet ist. Das Gasdruckelement spannt die Klappe besonders bevorzugt vor, insbesondere in deren Öffnungsrichtung. Insbesondere ist vorgesehen, dass die Klappenanordnung an einer ersten Seite der Klappe einen Antrieb, insbesondere Linearantrieb, vorzugsweise Spindelantrieb, und an der gegenüberliegenden Seite das Gasdruckelement aufweist. Insoweit handelt es sich bei der Antriebsanordnung dann insbesondere um ein Aktiv/Passiv-System.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemä-ßen Klappenanordnung, die mit einer vorschlagsgemäßen Antriebsanordnung ausgestattet ist,
- Fig. 2: eine Schnittansicht eines Gasdruckelements der Antriebsanordnung gemäß Fig. 1 im Ruhezustand a) nach dem Zusammentreiben und b) nach dem Auseinandertreiben der Antriebsanschlüsse in ihre Endlagen,
- Fig. 3: eine Schnittansicht einer Ventilanordnung des Gasdruckelements gemäß Fig. 1 in vergrößerter Darstellung a) in einem Offenzustand, b) in einem Verengungszustand und c) in einem Überlastzustand und
- Fig. 4: eine Schnittansicht der Ventilanordnung des Gasdruckelements gemäß Fig. 1 in vergrößerter Darstellung a) in einer ersten Variante, b) in einer zweiten Variante und c) in einer dritten Variante.

Die vorschlagsgemäße Antriebsanordnung 1 dient hier und vorzugsweise der motorischen Verstellung einer Klappe 2 eines Kraftfahrzeugs. Die vorschlagsgemäße Antriebsanordnung 1 kann in einer alternativen Ausführungsform aber auch rein federgetrieben, unter Vorsehen mindestens einer Gasfeder, oder rein manuell betreibbar, unter Vorsehen mindestens eines Gasdämpfers, sein. Die Klappe 2 ist mittels der Antriebsanordnung 1 in eine Öffnungsrichtung und/oder in eine Schließrichtung der Klappe 2 verstellbar.

Bei der Klappe 2 handelt es sich hier und vorzugsweise um eine Heckklappe des Kraftfahrzeugs. Die vorschlagsgemäße Antriebsanordnung 1 kann gerade bei dem Anwendungsfall "Heckklappe" besonders vorteilhaft eingesetzt werden, da Heckklappen ein vergleichsweise hohes Gewicht haben.

Grundsätzlich lässt sich die vorschlagsgemäße Antriebsanordnung 1 aber auch auf andere Arten von Klappen 2 eines Kraftfahrzeugs anwenden. Hierunter fallen Heckdeckel, Fronthauben oder dergleichen, aber auch Türen. Alle Ausführungen gelten für andere Klappen entsprechend.

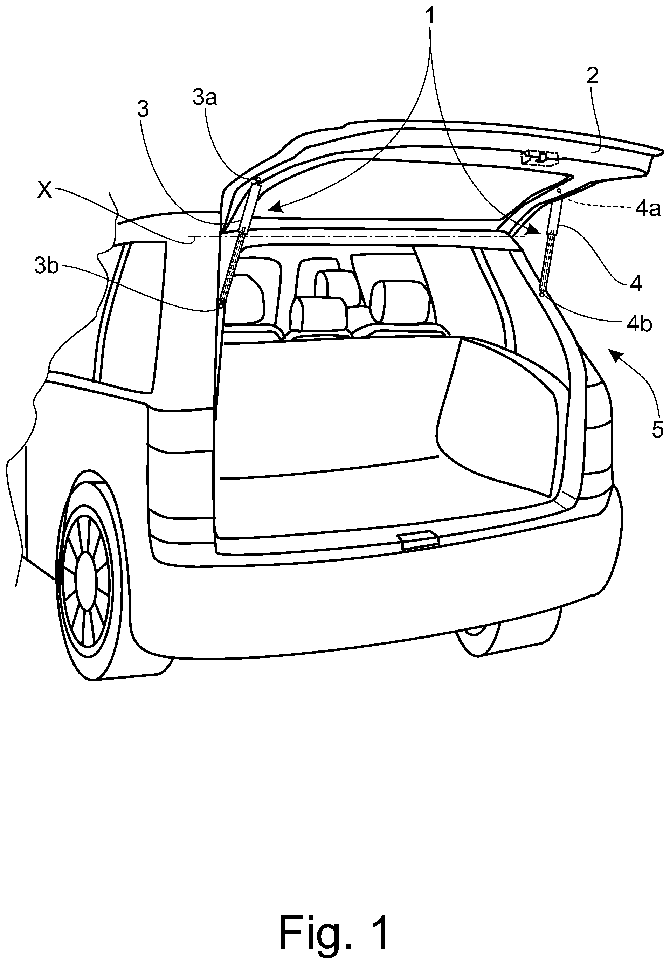

Wie Fig. 1 zeigt, weist die vorschlagsgemäße Antriebsanordnung 1 hier und vorzugsweise einen, hier genau einen, motorischen Antrieb 3 auf. Der motorische Antrieb 3 ist, was im Weiteren noch näher erläutert wird, hier und vorzugsweise ein Linearantrieb, insbesondere Spindelantrieb.

Weiter weist die vorschlagsgemäße Antriebsanordnung 1 ein, hier genau ein, Gasdruckelement 4 auf. Das Gasdruckelement 4 ist hier und vorzugsweise eine Gasfeder, insbesondere eine Gasdruckfeder. Hier und vorzugsweise spannt die Gasfeder die Klappe 2 in deren Öffnungsrichtung vor. Die Gasfeder kann grundsätzlich auch eine Gaszugfeder sein. Auch ist denkbar, dass das Gasdruckelement 4 ein Gasdämpfer ist, also keine federnde Wirkung aufweist.

In dem hier beschriebenen Ausführungsbeispiel ist nun beispielhaft eine Gasfeder als Gasdruckelement 4 vorgesehen. Diesbezügliche Ausführungen gelten aber für die anderen genannten Gasdruckelemente 4 gleichermaßen.

Die vorschlagsgemäße Antriebsanordnung 1 kann grundsätzlich auch mehr als einen motorischen Antrieb und/oder mehr als ein Gasdruckelement 4 aufweisen. Bei der in Fig. 1 dargestellten Klappenanordnung 5, die neben der Klappe 2 des Kraftfahrzeugs auch die Antriebsanordnung 1 aufweist, ist der motorische Antrieb 3 an einer ersten Seite der Klappe 2 und das Gasdruckelement 4 bzw. hier die Gasfeder an einer gegenüberliegenden, zweiten Seite der Klappe 2 angeordnet.

Der motorische Antrieb 3, der hier die Aktivseite eines Aktiv/Passiv-Systems bildet, ist zum Öffnen und Schließen der Klappe 2 eingerichtet. Zu diesem Zweck weist der Antrieb 3 eine hier nicht dargestellte Antriebseinheit mit einem elektrischen Antriebsmotor und gegebenenfalls einer oder mehreren weiteren Antriebskomponenten wie einem Zwischengetriebe, einer Überlastkupplung und/oder einer Bremse auf. Der Antriebseinheit ist hier und vorzugsweise ein ebenfalls nicht dargestelltes Lineargetriebe, insbesondere Spindel-Spindelmuttergetriebe, antriebstechnisch nachgeschaltet, das als Getriebekomponenten insbesondere eine Spindel und eine damit in kämmendem Eingriff stehende Spindelmutter aufweist. Hier und vorzugsweise ist die Spindel mit der Antriebseinheit antriebstechnisch gekoppelt und wird im Betrieb in Rotation versetzt, wodurch die Spindelmutter eine Linearbewegung entlang der Spindel ausführt.

Der die Antriebseinheit und das Lineargetriebe, insbesondere Spindel-Spindelmuttergetriebe, aufweisende motorische Antrieb 3 weist einen ersten, insbesondere spindelseitigen, Antriebsanschluss 3a und einen zweiten, insbesondere spindelmutterseitigen, Antriebsanschluss 3b auf, über die der Antrieb 3 mit dem Kraftfahrzeug gekoppelt ist. Hier und vorzugsweise ist der Antrieb 3 über den spindelseitigen Antriebsanschluss 3a mit der Klappe 2 und über den spindelmutterseitigen Antriebsanschluss 3b mit der Karosserie des Kraftfahrzeugs gekoppelt. Die linearen Antriebsbewegungen des Lineargetriebes treiben die Antriebsanschlüsse 3a, 3b entweder auseinander, was einer Verstellbewegung der Klappe 2 in ihre Öffnungsrichtung entspricht, oder treiben die Antriebsanschlüsse 3a, 3b zusammen, was einer Verstellbewegung der Klappe 2 in ihre Schließrichtung entspricht.

Die hier und vorzugsweise das Gasdruckelement 4 bildende Gasfeder, die die Passivseite des Aktiv/Passiv-Systems bildet, verfügt über keinen eigenen motorischen Antrieb, sondern stellt hier eine Federfunktion bereit. So soll die Gasfeder einen Teil der Gewichtskraft der Klappe 2 aufnehmen und dadurch die Klappe 2, wenn diese geöffnet ist, in der Nähe des Gleichgewichtszustands halten oder diese in Öffnungsrichtung drängen.

Das Gasdruckelement 4 weist in an sich üblicher Weise einen nach außen gedichteten Zylinder 6 und einen in dem vom Zylinder 6 radial umschlossenen Innenraum 7 entlang der Zylinderachse A laufenden, den Zylinderinnenraum 7 in zwei Teilräume 7a, 7b unterteilenden Kolben 8 auf. Der Kolben 8 weist eine Kolbenstange 8a auf, die entlang der Zylinderachse A verläuft und relativ zu dem Zylinder 6 bewegbar ist. Die Kolbenstange 8a durchdringt dichtend eine axiale Öffnung im Zylinder 6, wodurch ein Abschnitt der Kolbenstange 8a im Zylinderinnenraum 7 und ein weiterer Abschnitt außerhalb des Zylinders 6 angeordnet ist. Der Kolben 8 weist ferner an dem im Zylinderinnenraum 7 angeordneten Abschnitt der Kolbenstange 8a, insbesondere an seinem vorderen Ende, einen Grundkörper 8b auf, der insbesondere den Kolbenkopf bildet. Der Grundkörper 8b weist hier und vorzugsweise einen Querschnitt, bezogen auf einen Schnitt in radialer Richtung des Zylinders 6, auf, der dem des Zylinderinnenraums 7 entspricht.

Das Gasdruckelement 4 weist ferner einen ersten Antriebsanschluss 4a, der mit dem Zylinder 6 verbunden ist, und einen zweiten Antriebsanschluss 4b, der mit dem Kolben 8 verbunden ist, auf. Der Zylinder 6 ist dabei derart mit dem unter Druck stehenden Fluid gefüllt, dass die beiden Antriebsanschlüsse 4a, 4b auseinandergetrieben werden. Das Fluid ist insbesondere ein komprimierbares Gas und kann gegebenenfalls, vorzugsweise in geringen Mengen, auch eine Flüssigkeit wie Öl aufweisen, um beispielsweise eine Endlagendämpfung zu bewirken.

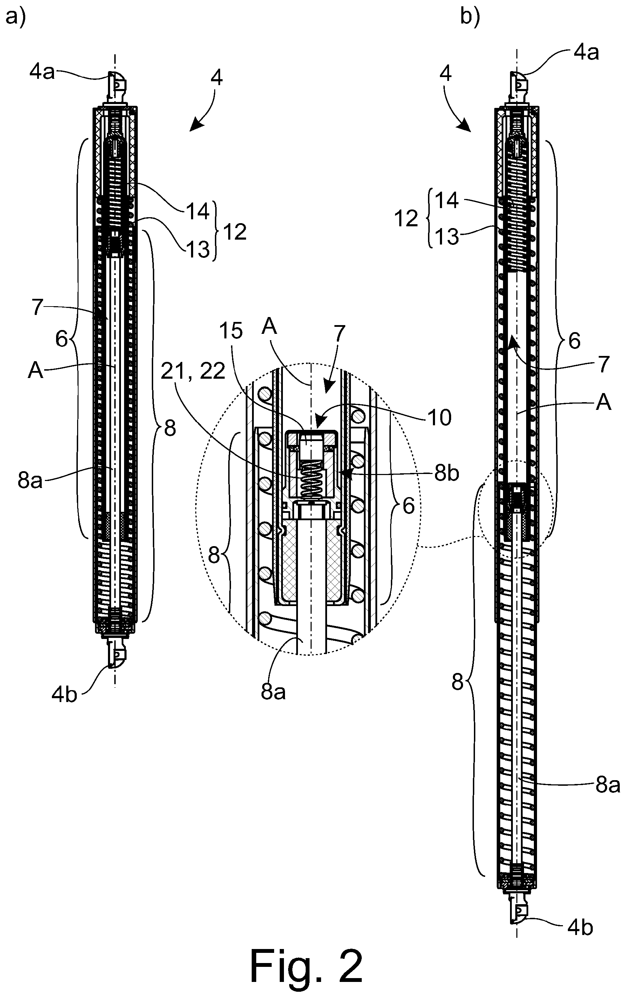

Im unbelasteten Zustand, wenn also keine Kräfte von außen auf das Gasdruckelement 4 wirken, befinden sich die beiden Antriebsanschlüsse 4a, 4b also in der maximal auseinandergetriebenen Stellung, die in den Figuren 1 und 2b) gezeigt ist. Diese Stellung der Antriebsanschlüsse 4a, 4b relativ zueinander entspricht auch hier und vorzugsweise der in Fig. 1 dargestellten Offenstellung der Klappe 2. Der zylinderseitige Antriebsanschluss 4a ist dabei mit der Klappe 2 und der kolbenseitige Antriebsanschluss 4b mit der Karosserie des Kraftfahrzeugs gekoppelt. Es sei nochmals hervorgehoben, dass, wie zuvor erläutert, der Zylinder 6 auch drucklos sein kann, nämlich im Falle eines Gasdämpfers anstelle einer Gasfeder.

Der Kolben 8 weist eine Überströmkanalanordnung 9 auf, durch die auf eine Kolbenbewegung zum Ausgleich eines Druckgefälles zwischen den beiden Teilräumen 7a, 7b eine Ausgleichsströmung zwischen den beiden Teilräumen 7a, 7b entsteht.

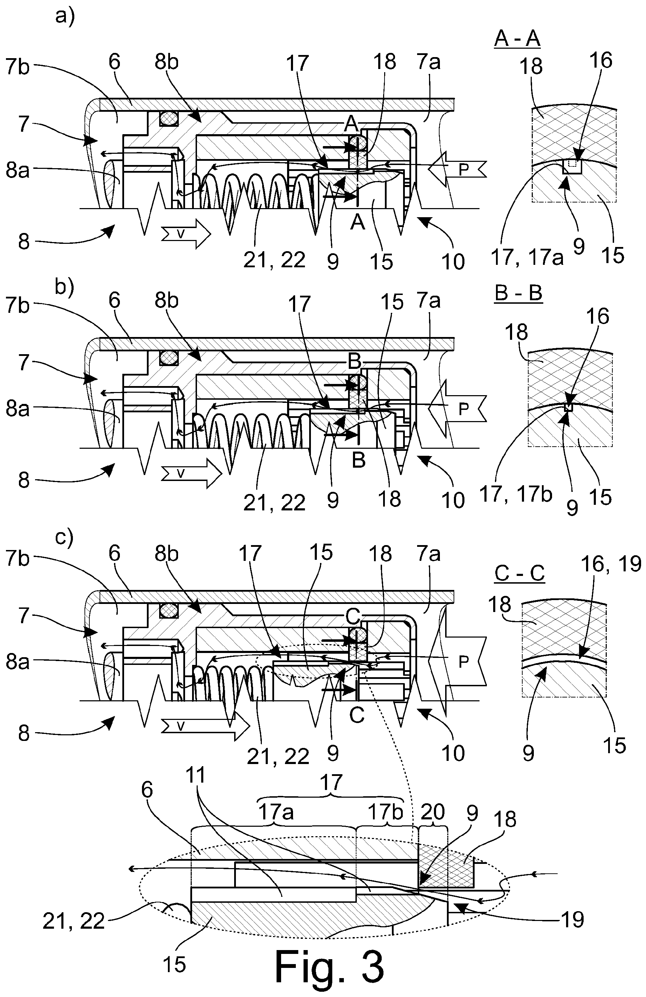

Im Normalbetrieb ist es nun so, dass bei einer die Antriebsanschlüsse 4a, 4b zusammentreibenden externen Kraft, beispielsweise bei einem motorischen oder manuellen Schließen der Klappe 2, der Kolben 8 relativ zum Zylinder 6 aus der in Fig. 2b) gezeigten Stellung ausgelenkt wird, und zwar in Richtung der in Fig. 2a) gezeigten Stellung. Der im Zylinderinnenraum 7 angeordnete Abschnitt des Kolbens 8 verlagert sich also entlang der Zylinderachse A durch den Zylinderinnenraum 7, wodurch die beiden Teilräume 7a, 7b des Zylinderinnenraums 7 ihr Volumen ändern. Wie Fig. 2 zu entnehmen ist, verringert sich bei dem Ausführungsbeispiel, wenn die Antriebsanschlüsse 4a, 4b zusammengetrieben werden, das Volumen des Teilraums 7a, wohingegen sich das Volumen des Teilraums 7b vergrößert. Dabei strömt, wie die Detailansicht in Fig. 3a) zeigt, das Fluid als Ausgleichsströmung von dem oberen Teilraum 7a in den unteren Teilraum 7b durch die Überströmkanalanordnung 9. Da das Fluid hier und vorzugsweise unter Druck in den Zylinder 6 eingefüllt ist, drückt das Fluid auf die Querschnittsfläche des Kolbens 8, hier des Grundkörpers 8b, und drückt dadurch den Kolben 8 relativ zum Zylinder 6 ständig in die Stellung, die in Fig. 2b) dargestellt ist. Grund hierfür ist, dass die Querschnittsfläche des Kolbens 8 bzw. Grundkörpers 8a auf der kolbenabgewandten Seite, hier also zum Teilraum 7a hin, größer als auf der gegenüberliegenden Seite ist, da auf der gegenüberliegenden Seite die von dem Fluiddruck beaufschlagte Querschnittsfläche lediglich von einem um die Kolbenstange 8a herum verlaufenden Ring gebildet wird. Die auf der Seite des Teilraums 7b wirksame Ringfläche ist kleiner als die auf der Seite des Teilraums 7a wirksame Fläche, die dem gesamten Querschnitt des Zylinderinnenraums 7 entspricht. Entsprechend wirkt vonseiten des Teilraums 7a eine größere Druckkraft auf den Kolben 8 bzw. Grundkörper 8b als von der anderen Seite, wodurch der Kolben 8 ständig aus dem Zylinder 6 herausgedrückt wird.

Dem Kolben 8 ist nun eine schaltbare Ventilanordnung 10 zugeordnet, die abhängig vom Druckgefälle zwischen den beiden Teilräumen 7a, 7b in unterschiedliche Durchströmungszustände bringbar ist, die sich in der Größe des Querschnitts der Überströmkanalanordnung 9 unterscheiden. Mit dem Querschnitt der Überströmkanalanordnung 9 ist der für die Ausgleichsströmung zur Verfügung stehende, beim Druckausgleich durchströmbare, Querschnitt gemeint. Dabei ist es so, dass sich das Druckgefälle, wenn die beiden Antriebsanschlüsse 4a, 4b zusammengetrieben werden, abhängig von der Kolbengeschwindigkeit v, also der Geschwindigkeit, mit der der Kolben 8 relativ zum Zylinder 6 bewegt wird, ändert. Mit zunehmender Kolbengeschwindigkeit v kann die Ausgleichsströmung das Druckgefälle zwischen den beiden Teilräumen 7a, 7b nicht mehr schnell genug ausgleichen, so dass der Druck in dem einen der Teilräume, hier in dem Teilraum 7a, immer weiter ansteigt. Entsprechend erhöht sich die Druckkraft, die auf den Grundkörper 8b und die Ventilanordnung 10 wirkt, was dazu führt, dass die Ventilanordnung 10 in einem anderen Durchströmungszustand schaltet, was im weiteren noch näher erläutert wird.

Wesentlich ist nun, dass, insbesondere wenn die beiden Antriebsanschlüsse 4a, 4b zusammengetrieben werden, die Ventilanordnung 10 bei Überschreiten eines vorbestimmten oberen Grenzwertes für das Druckgefälle selbsttätig in einen Überlastzustand schaltet, in dem sie den Querschnitt der Überströmkanalanordnung 9 vergrößert, insbesondere maximiert.

Der Querschnitt der Überströmkanalanordnung 9 - gemeint ist die Querschnittsfläche orthogonal zur Strömungsrichtung der Ausgleichsströmung - ist wie folgt definiert: Wenn die Überströmkanalanordnung 9 mehrere Fluidkanäle 11 aufweist, die zur fluidtechnischen Verbindung, das heißt zum Hindurchführen der Ausgleichsströmung, zwischen den beiden Teilräumen 7a, 7b dienen, dann entspricht der Querschnitt der Überströmkanalanordnung 9 der Summe aller engsten Querschnitte der Fluidkanäle 11, ist also der Gesamtquerschnitt, der sich aus der Summe aller Einzelquerschnitte an der jeweils engsten Stelle der Fluidkanäle 11 ergibt. Wenn die Überströmkanalanordnung 9 nur einen einzigen solchen Fluidkanal 11 aufweist, dann entspricht der Querschnitt der Überströmkanalanordnung 9 dem Querschnitt an der jeweils engsten Stelle dieses Fluidkanals 11.

Damit, dass die Ventilanordnung 10 den Querschnitt der Überströmkanalanordnung 9 vergrößert, ist gemeint, dass der Querschnitt der Überströmkanalanordnung 9 dann größer wird, als dieser zuletzt in dem vorherigen Durchströmungszustand, nämlich dem im Weiteren noch beschriebenen Verengungszustand, war. Mit "maximiert" ist gemeint, dass der Querschnitt der Überströmkanalanordnung 9 dann nicht nur größer wird, sondern es wird der größte Querschnitt erreicht, den die Überströmkanalanordnung 9 - aus der Summe aller engsten Querschnitte - bereitstellen kann.

Die Ventilanordnung 10 funktioniert dann nach Art eines Überdruckventils. Wird der Druck in Folge einer besonders hohen Kolbengeschwindigkeit v in dem Teilraum 7a zu groß, wird also der vorbestimmte obere Grenzwert für das Druckgefälle überschritten, wird die Ventilanordnung 10 geöffnet und ermöglicht einen, insbesondere schlagartigen, Druckausgleich zwischen dem Teilraum 7a und dem Teilraum 7b. Durch einen solchen Druckausgleich werden, wenn in einem Überlastfall plötzlich eine sehr große Kraft die beiden Antriebsanschlüsse 4a, 4b immer schneller zusammentreibt, wodurch sich die Kolbengeschwindigkeit v erhöht, Beschädigungen am Gasdruckelement 4 vermieden.

Die zuvor beschriebene Funktion, wonach die Ventilanordnung 10 in den Überlastzustand schalten kann, ist in Fig. 3c) dargestellt. Fig. 3a) zeigt einen im Weiteren noch näher beschriebenen Offenzustand der Ventilanordnung 10, den diese im Normalbetrieb des Gasdruckelements 4 einnimmt. Fig. 3b) zeigt einen Zustand der Ventilanordnung 10 zwischen dem Offenzustand und dem Überlastzustand, den sogenannten Verengungszustand, der im Folgenden beschrieben wird.

So schaltet hier und vorzugsweise die Ventilanordnung 10, insbesondere wenn die beiden Antriebsanschlüsse 4a, 4b zusammengetrieben werden, bei Überschreiten eines vorbestimmten unteren Grenzwertes für das Druckgefälle selbsttätig in besagten Verengungszustand, in dem sie den Querschnitt der Überströmkanalanordnung 9 verringert, insbesondere minimiert. Hier und vorzugsweise bleibt der Querschnitt der Überströmkanalanordnung 9 nach Überschreiten des vorbestimmten unteren Grenzwertes für das Druckgefälle und bis zum Erreichen des vorbestimmten oberen Grenzwertes für das Druckgefälle, also im Verengungszustand, weiterhin geöffnet, allerdings mit kleinerem Querschnitt. Somit bleibt die Überströmkanalanordnung 9 weiterhin durchströmbar. Grundsätzlich ist es gemäß einer anderen, hier nicht dargestellten Ausführungsform aber auch denkbar, dass der Querschnitt der Überströmkanalanordnung 9 geschlossen wird, somit nicht mehr durchströmbar ist. Der Verengungszustand ist also nicht notwendiger Weise ein Durchströmungszustand, bei dem der Querschnitt gegenüber dem vorherigen Durchströmungszustand nur verringert wird, sondern der Querschnitt kann auch vollständig geschlossen werden. Den Verengungszustand hat die Ventilanordnung 10 dann solange inne, bis entweder ein Überlastfall aufgrund einer weiter zunehmenden Kolbengeschwindigkeit v und eines sich dadurch weiter aufbauenden Druckgefälles eintritt, die Ventilanordnung 10 also in den Überlastzustand schaltet, oder bis das Gasdruckelement 4 wieder in den Normalbetrieb wechselt, weil die Kolbengeschwindigkeit v und entsprechend das Druckgefälle kleiner geworden sind, beispielsweise durch Wegfall einer zusätzlichen auf die Klappe 2 einwirkenden Kraft insbesondere beim Schließvorgang.

Damit, dass die Ventilanordnung 10 den Querschnitt der Überströmkanalanordnung 9 verringert, ist gemeint, dass der Querschnitt der Überströmkanalanordnung 9 dann kleiner wird, als dieser zuletzt in dem vorherigen Durchströmungszustand, nämlich dem im Weiteren noch beschriebenen Offenzustand, war. Mit "minimiert" ist gemeint, dass der Querschnitt der Überströmkanalanordnung 9 dann nicht nur kleiner wird, sondern es wird der kleinste Querschnitt erreicht, den die Überströmkanalanordnung 9 - aus der Summe aller engsten Querschnitte - bereitstellen kann. Wie angedeutet, kann der kleinste Querschnitt auch bedeuten, dass die Überströmkanalanordnung 9 dann geschlossen und nicht durchströmbar ist.

Mit einem Überschreiten eines vorbestimmten unteren Grenzwertes ist hier gemeint, dass bis zum Erreichen des vorbestimmten unteren Grenzwertes das Druckgefälle immer weiter ansteigt, aber noch nicht zu einem Schalten der Ventilanordnung 10 führt. Erst bei Überschreiten des unteren Grenzwertes schaltet die Ventilanordnung 10 selbsttätig und verringert dadurch den Querschnitt der Überströmkanalanordnung 9.

Durch die Verringerung des Querschnitts der Überströmkanalanordnung 9 erhöht sich die Dämpfung, auch als Dämpfungskraft bezeichnet, die auf den Kolben 8 ausgeübt wird, wenn dieser sich im Zylinder 6 bewegt. Dadurch wird der Kolbenbewegung, also der Bewegung des Kolbens 8 im Zylinder 6, entgegengewirkt. So wirkt die Dämpfung der Kraft, die in das Gasdruckelement 4 eingeleitet wird und die Antriebsanschlüsse 4a, 4b zusammentreibt, entgegen, wodurch sich die Kolbengeschwindigkeit v, unter der Annahme einer konstanten oder geringeren Kraft, die in das Gasdruckelement 4 eingeleitet wird, verringert. Die Verstellbewegung, insbesondere Schließbewegung, der Klappe 2 wird dadurch gebremst.

Hier und vorzugsweise ist es dabei so, dass der untere Grenzwert für das Druckgefälle einer Kolbengeschwindigkeit v in einem Bereich von 15 mm/s bis 100 mm/s, vorzugsweise von 30 mm/s bis 80 mm/s, weiter vorzugsweise von 40 mm/s bis 60 mm/s, insbesondere von 40 mm/s, entspricht, und/oder, dass der obere Grenzwert für das Druckgefälle einer Kolbengeschwindigkeit v in einem Bereich von 25 mm/s bis 120 mm/s, vorzugsweise von 40 mm/s bis 100 mm/s, weiter vorzugsweise von 50 mm/s bis 80 mm/s, insbesondere von 50 mm/s, entspricht.

Dabei kann vorgesehen sein, dass die Dämpfungskraft beim Erreichen des unteren Grenzwerts für das Druckgefälle in einem Bereich von 100 N bis 800 N, vorzugsweise von 200 bis 700 N, weiter vorzugsweise von 400 N bis 500 N, insbesondere bei 450 N, liegt, und/oder, dass die Dämpfungskraft beim Erreichen des oberen Grenzwerts für das Druckgefälle in einem Bereich von 300 N bis 3000 N, vorzugsweise von 500 bis 2000 N, weiter vorzugsweise von 700 N bis 1500 N, insbesondere bei 900 N, liegt.

Aus dem Ruhezustand des Gasdruckelements 4 heraus steigt die Dämpfungskraft im Normalbetrieb bis zum Erreichen des unteren Grenzwerts für das Druckgefälle vorzugsweise relativ langsam an, bspw. von etwa 350 N bei stillstehendem Kolben auf etwa 450 N bei einer Kolbengeschwindigkeit v von 40 mm/s. Weiter steigt die Dämpfungskraft dann im Verengungszustand bis zum Erreichen des oberen Grenzwerts für das Druckgefälle vorzugsweise relativ schnell an, bspw. von etwa 450 N bei einer Kolbengeschwindigkeit v von 40 mm/s auf etwa 900 N bei einer Kolbengeschwindigkeit v von 50 mm/s an. Schließlich bleibt die Dämpfungskraft dann im Überlastzustand vorzugsweise im Wesentlichen konstant, bspw. bei etwa 900 N bei einer Kolbengeschwindigkeit v oberhalb von 50 mm/s.

Wie bereits erläutert und in Fig. 3a) dargestellt, hat die Ventilanordnung 10, insbesondere wenn die beiden Antriebsanschlüsse 4a, 4b zusammengetrieben werden, im Normalbetrieb des Gasdruckelements 4 einen Offenzustand inne, in dem die Überströmkanalanordnung 9 einen Querschnitt hat, der größer als im Verengungszustand und/oder kleiner als im Überlastzustand ist. Dies gilt im Übrigen auch für den in den Fig. 2a) und b) gezeigten jeweiligen Ruhezustand des Gasdruckelements 4, wenn dieses also nicht betrieben wird und die beiden Antriebsanschlüsse 4a, 4b also zueinander stillstehen, wobei dann überhaupt kein Druckgefälle vorliegt. Zusätzlich oder alternativ kann vorgesehen sein, dass, insbesondere wenn die beiden Antriebsanschlüsse 4a, 4b zusammengetrieben werden, die Ventilanordnung 10 bei ansteigendem Druckgefälle selbsttätig von einem Offenzustand, in dem die Überströmkanalanordnung 9 einen Querschnitt hat, der größer als im Verengungszustand und/oder kleiner als im Überlastzustand ist, insbesondere über den Verengungszustand, in den Überlastzustand schalten kann.

Das selbsttätige Schalten der Ventilanordnung 10 vom Offenzustand in den Verengungszustand und gegebenenfalls weiter in den Überlastzustand ist insbesondere nur in einer einzigen Verstellrichtung des Gasdruckelements 4, insbesondere in der der Schließrichtung der Klappe 2 entsprechenden Verstellrichtung, vorgesehen. Grundsätzlich ist es aber in einer anderen, hier nicht dargestellten Ausführungsform auch denkbar, dass das selbsttätige Schalten der Ventilanordnung 10 vom Offenzustand in den Verengungszustand und gegebenenfalls weiter in den Überlastzustand zusätzlich oder alternativ in der der Öffnungsrichtung der Klappe 2 entsprechenden Verstellrichtung vorgesehen ist.

Bei der hier dargestellten und insoweit bevorzugten Antriebsanordnung 1 ist es ferner so, dass die Ventilanordnung 10 bei Unterschreiten des vorbestimmten oberen Grenzwertes für das Druckgefälle selbsttätig aus dem Überlastzustand in den Verengungszustand schaltet, und/oder, dass die Ventilanordnung 10 bei Unterschreiten des vorbestimmten unteren Grenzwertes für das Druckgefälle selbsttätig aus dem Verengungszustand in den Offenzustand schaltet. Dies gilt jedenfalls, wenn die beiden Antriebsanschlüsse 4a, 4b zusammengetrieben werden, insbesondere aber auch, wenn die beiden Antriebsanschlüsse 4a, 4b auseinander getrieben werden, beispielsweise durch die im Folgenden beschriebene optionale Antriebsfederanordnung 12.

So weist, wie in Fig. 2 für das vorliegende Ausführungsbeispiel dargestellt ist, das Gasdruckelement 4 hier und vorzugsweise eine Antriebsfederanordnung 12 auf, die mindestens eine erste Schraubenfeder 13 und/oder mindestens eine zweite Schraubenfeder 14 aufweist. Bei der ersten Schraubenfeder 13 und/oder zweiten Schraubenfeder 14 handelt es sich insbesondere wie hier um eine Schraubendruckfeder oder -zugfeder, die vorzugsweise parallel oder koaxial zu dem Zylinder 6 angeordnet ist. Insbesondere umgibt dabei die erste Schraubenfeder 13 den Zylinder 6 radial. Die zweite Schraubenfeder 14 ist dabei insbesondere von dem Zylinder 6 radial umschlossen.

Die mindestens eine erste Schraubenfeder 13 dient vorzugsweise dazu, die Antriebsanschlüsse 4a, 4b auseinander zu treiben, wobei die erste Schraubenfeder 13 insbesondere über den gesamten Bewegungsbereich des Kolbens 8, also über seinen gesamten Hub, der Kolbenbewegung entgegenwirkt. Die mindestens eine zweite Schraubenfeder 14 wirkt, wenn die beiden Antriebsanschlüsse 4a, 4b zusammengetrieben werden, der Kolbenbewegung vorzugsweise nur über den letzten Teil seines Bewegungsbereichs entgegen.

Die Ventilanordnung 10 ist hier und vorzugsweise so ausgelegt, dass, gegebenenfalls unterstützt durch die Antriebsfederanordnung 12, wenn die beiden Antriebsanschlüsse 4a, 4b zusammengetrieben werden, im Überlastzustand das Druckgefälle, insbesondere schlagartig, verringert werden kann, nämlich durch das Vergrößern des Querschnitts der Überströmkanalanordnung 9, bis der vorbestimmte obere Grenzwert für das Druckgefälle wieder unterschritten wird, so dass die Ventilanordnung 10 selbsttätig in den Verengungszustand schaltet.

Mit "verringert werden kann" ist gemeint, dass das Druckgefälle zumindest dann verringert wird, wenn die Kraft, die in das Gasdruckelement 4 eingeleitet wird und die Antriebsanschlüsse 4a, 4b zusammentreibt, konstant bleibt oder sinkt. Dies ist zum Beispiel dann der Fall, wenn die Kraft, die in das Gasdruckelement 4 eingeleitet wird und die Antriebsanschlüsse 4a, 4b zusammentreibt, allein aus der Gewichtskraft der Klappe 2 resultiert. Indem die Ventilanordnung 10, bedingt durch die insbesondere schlagartige Verringerung des Druckgefälles, in den Verengungszustand gebracht wird, wird durch die damit einhergehende Verringerung des Querschnitts der Überströmkanalanordnung 9 die Dämpfung erhöht, wodurch die Kolbenbewegung und entsprechend die Bewegung der beiden Antriebsanschlüsse 4a, 4b aufeinander zu verlangsamt werden kann.

Wie gesagt kann die Ventilanordnung 10 hierbei durch die Antriebsfederanordnung 12 unterstützt werden. Das bedeutet, dass die Federkraft der Antriebsfederanordnung 12, wenn die beiden Antriebsanschlüsse 4a, 4b zusammengetrieben werden, der Kolbenbewegung entgegenwirkt, und zwar vorzugsweise dauerhaft über die erste Schraubenfeder 13 und insbesondere zusätzlich noch abschnittsweise über die zweite Schraubenfeder 14. Die Kolbenbewegung und entsprechend die Bewegung der beiden Antriebsanschlüsse 4a, 4b aufeinander zu kann dadurch, zumindest in einem begrenzten Teilbereich der Schwenkbewegung der Klappe 2, zusätzlich verlangsamt werden.

Es ist hierbei auch denkbar, dass bedingt durch die insbesondere schlagartige Verringerung des Druckgefälles die Ventilanordnung 10 sogar - über den Verengungszustand - temporär in den Offenzustand schaltet, weil temporär auch der untere Grenzwert für das Druckgefälle unterschritten wird, und dann wieder den Verengungszustand schaltet, in dem dann durch die Verringerung des Querschnitts der Überströmkanalanordnung 9 die Kolbenbewegung und entsprechend die Bewegung der beiden Antriebsanschlüsse 4a, 5b aufeinander zu verlangsamt wird.

Es ist grundsätzlich auch denkbar, dass die obigen Schaltvorgänge mehrfach durchlaufen werden, um die Schließbewegung der Klappe 2 des Kraftfahrzeugs in einem Überlastfall zu verlangsamen. Die Ventilanordnung 10 schaltet dann bedingt durch die insbesondere schlagartige Verringerung des Druckgefälles in den die Dämpfung erhöhenden Verengungszustand, dann aber, weil das Druckgefälle wieder ansteigt, wieder in den Überlastzustand, in dem die Dämpfung wieder verringert ist. Dann schaltet die Ventilanordnung 10 bedingt durch die erneute insbesondere schlagartige Verringerung des Druckgefälles erneut in den die Dämpfung erhöhenden Verengungszustand. Mit jedem erneuten Schalten in den Verengungszustand wird die Kolbengeschwindigkeit v dann im Vergleich zum letzten Mal, als sich die Ventilanordnung 10 im Verengungszustand befunden hat, weiter verringert und die Schwenkbewegung der Klappe 2 verlangsamt.

Um die Schwenkbewegung der Klappe 2 zu verlangsamen, ist es von Vorteil, wenn wie bei dem vorliegenden Ausführungsbeispiel die Antriebsfederanordnung 12 so ausgelegt ist, dass ihre Federkraft mit einer Verringerung des Abstands der beiden Antriebsanschlüsse 4a, 4b zueinander ansteigt, vorzugsweise derart, dass bei einer Schließbewegung der Klappe 2 eine Verringerung des kürzesten senkrechten Abstands zwischen der Schwenkachse X der Klappe 2 und der Wirkungslinie der Federkraft, aus der das auf die Klappe 2 ausgeübte Moment resultiert, zumindest zum Teil, vorzugsweise vollständig, kompensiert wird.

Auf diese Weise ist eine optimale Unterstützung der Ventilanordnung 10 durch die Federanordnung 12, vorzugsweise über nahezu den gesamten Schwenkbereich der Klappe, gegeben. Ein Abbremsen einer schließenden Klappe kann auf diese Weise noch effektiver durchgeführt werden.

Im Folgenden soll nun anhand der Darstellung in Fig. 3 eine besonders bevorzugte Ausführungsform eines Gasdruckelements 4 beschrieben werden.

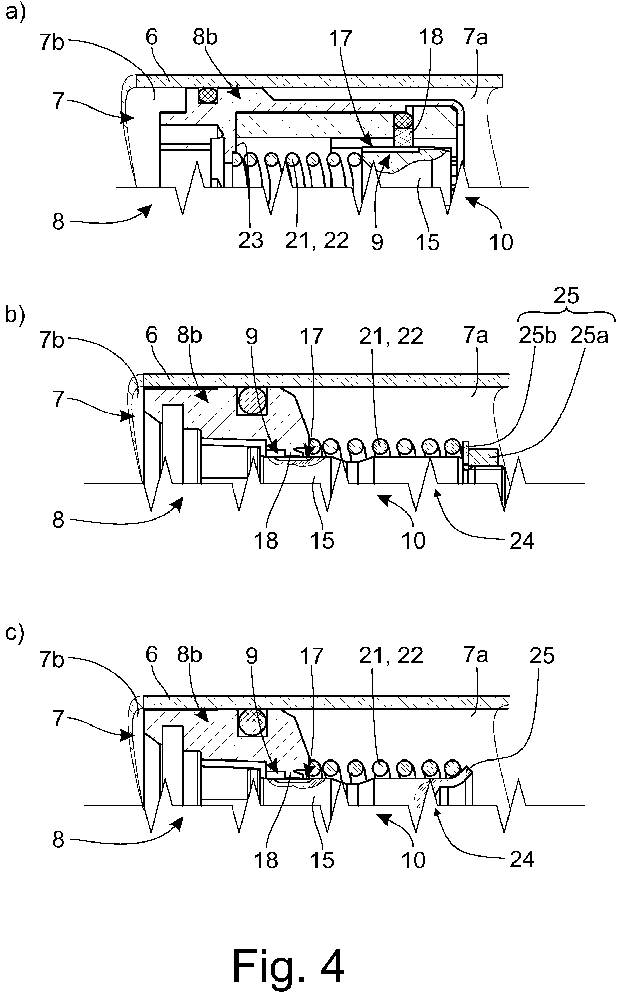

So weist, wie bereits zuvor erläutert, der Kolben 8 eine Kolbenstange 8a und einen an der Kolbenstange 8a befestigten, insbesondere dazu axialfesten, Grundkörper 8b auf, der insbesondere zumindest zum Teil gegenüber der Zylinderinnenfläche gedichtet ist. Die Ventilanordnung 10 weist wiederum hier und vorzugsweise einen zum Grundkörper 8b beweglichen, insbesondere zum Grundkörper 8b axialbeweglichen, Ventilkörper 15 auf, der insbesondere innerhalb, vorzugsweise radial innerhalb, des Grundkörpers 8b angeordnet ist. Der Ventilkörper 15 ist hier und vorzugsweise gemäß Fig. 3 und Fig. 4a) über zumindest einen Teil seiner axialen Erstreckung, vorzugsweise den größten Teil seiner axialen Erstreckung, weiter vorzugsweise seine gesamte axiale Erstreckung, zumindest in seiner im Folgenden noch beschriebenen Offenstellung, insbesondere in jeder der im Folgenden noch beschriebenen Schaltstellungen, radial von dem Grundkörper 8b umgeben. Bei den Varianten in Fig. 4b) und Fig. 4c) erstreckt sich der Ventilkörper 15 hier und vorzugsweise über zumindest einen Teil seiner axialen Erstreckung, vorzugsweise den größten Teil seiner axialen Erstreckung, zumindest in seiner im Folgenden noch beschriebenen Offenstellung, insbesondere in jeder der im Folgenden noch beschriebenen Schaltstellungen, axial außerhalb des Grundkörpers 8b.

Dabei ist die Überströmkanalanordnung 9 zwischen dem Grundkörper 8b und dem Ventilkörper 15 ausgebildet. Der Ventilkörper 15 ist dabei hier und vorzugsweise entlang der Zylinderachse A an, insbesondere in, dem Grundkörper 8b geführt.

Der Ventilkörper 15 ist hier und vorzugsweise gegenüber dem Grundkörper 8b des Kolbens 8 in mehrere Schaltstellungen umfassend mindestens eine Offenstellung (Fig. 3a)), in der die Ventilanordnung 10 den Offenzustand inne hat, mindestens eine Verengungsstellung (Fig. 3b)), in der die Ventilanordnung 10 den Verengungszustand inne hat, und/oder mindestens eine Überlaststellung (Fig. 3c)), in der die Ventilanordnung 10 den Überlastzustand inne hat, verstellbar. Dazu ist der Ventilkörper 15 hier aus seiner Ausgangsstellung (Fig. 2), die er im Ruhezustand des Gasdruckelements 4 inne hat, zur Kolbenstange 8a hin auslenkbar, vorzugsweise gegen eine Federkraft, wie im weiteren noch beschrieben wird. Vorzugsweise kann der Ventilkörper 15 gegenüber dem Grundkörper 8b des Kolbens 8 wie hier auch mehrere Offenstellungen, in der die Ventilanordnung 10 den Offenzustand inne hat, mehrere Verengungsstellungen, in der die Ventilanordnung 10 den Verengungszustand inne hat, und/oder mehrere Überlaststellungen, in der die Ventilanordnung 10 den Überlastzustand inne hat, einnehmen. In diesem Fall kann der Ventilkörper 15 also mehrere Stellungen des Typs "Offenstellung", mehrere Stellungen des Typs "Verengungsstellung" und/oder mehrere Stellungen des Typs "Überlaststellung" einnehmen. So ist hier sowohl die in Fig. 2 gezeigte Ausgangsstellung als auch die in Fig. 3a) gezeigte Stellung jeweils eine Stellung des Typs "Offenstellung", also eine Offenstellung, in der die Ventilanordnung 10 den Offenzustand inne hat.

Die Überströmkanalanordnung 9 weist nun einen oder mehrere Fluidkanäle 11 auf, die zur fluidtechnischen Verbindung zwischen den beiden Teilräumen 7a, 7b dienen. Jedenfalls im Überlastzustand und im Offenzustand verbinden diese Fluidkanäle 11 die beiden Teilräume 7a, 7b fluidtechnisch miteinander. Dazu verlaufen die Fluidkanäle 11 zwischen dem Grundkörper 8b und dem Ventilkörper 15. In einem oder mehreren der Fluidkanäle 11 ist eine Engstelle 16 vorgesehen oder erzeugbar, die den kleinsten Querschnitt des Fluidkanals 11 definiert, der von der Ausgleichsströmung durchströmbar ist. Der jeweilige Querschnitt mindestens einer Engstelle 16 oder aller Engstellen 16 und/oder der Gesamtquerschnitt aller Engstellen 16 ändert sich abhängig von der Schaltstellung (Überlaststellung, Verengungsstellung, Offenstellung) des Ventilkörpers 15 gegenüber dem Grundkörper 8b des Kolbens 8.

Mit "vorgesehen oder erzeugbar ist" ist gemeint, dass entweder in dem jeweiligen Fluidkanal 11 eine Engstelle 16 ständig vorhanden ist und sich der Querschnitt dieser Engstelle 16 abhängig von der Schaltstellung des Ventilkörpers 15 verändert, indem die radiale Kontur der Engstelle 16 abhängig von der Schaltstellung des Ventilkörpers 15, wenn dieser relativ zum Grundkörper 8b verlagert wird, abschnittsweise von unterschiedlich geformten Materialabschnitten insbesondere des Ventilkörpers 15 gebildet wird. Oder ein in einer bestimmten Schaltstellung des Ventilkörpers 15 nicht aktiver Fluidkanal 11, der also in dieser Schaltstellung die beiden Teilräume 7a, 7b nicht miteinander fluidtechnisch verbindet und somit auch keine durchströmbare Engstelle 16 hat, ist in einer anderen Schaltstellung des Ventilkörpers 15 aktiv, verbindet dann also in dieser Schaltstellung die beiden Teilräume 7a, 7b fluidtechnisch miteinander, wodurch erst eine Engstelle 16 gebildet wird. Der Fluidkanal 11 wird dann also "zugeschaltet", wobei gegebenenfalls ein anderer Fluidkanal 11 mit einer Engstelle 16 eines anderen Querschnitts dann "abgeschaltet" wird, also dann nicht mehr aktiv ist. Letzteres ist beispielsweise dadurch realisierbar, dass über den Umfang des Ventilkörpers 15 unterschiedlich lange Fluidkanäle 11 vorgesehen sind, die sich insbesondere im aktiven Zustand im Querschnitt ihrer jeweiligen Engstelle 16 unterscheiden, wobei abhängig von der Schaltstellung unterschiedliche der Fluidkanäle 11 oder eine andere Anzahl an Fluidkanälen 11 von der Ausgleichsströmung durchströmbar ist.

Der Gesamtquerschnitt ist hierbei die Summe aller Querschnitte der einzelnen Engstellen 16. Die jeweilige Engstelle 16, also die Stelle mit dem jeweils kleinsten durchströmbaren Querschnitt des Fluidkanals 11, verlagert sich bei dem hier dargestellten Ausführungsbeispiel abhängig von der Schaltstellung des Ventilkörpers 15, das heißt die Engstelle 16 ist je nach Schaltstellung des Ventilkörpers 15 an anderen Stellen des Ventilkörpers 15 oder Grundkörpers 8b ausgebildet.

Dabei ist hier und vorzugsweise im Ventilkörper 15 je Fluidkanal 11 eine Nut 17 ausgebildet. Die Engstelle 16 des Fluidkanals 11 wird dabei hier und vorzugsweise bei einem oder mehreren Typen von Schaltstellungen, insbesondere beim Typ "Verengungsstellung" und/oder "Offenstellung", also in einer Verengungsstellung und/oder Offenstellung, zwischen jeweils einem Nutabschnitt 17a, 17b der Nut 17 und einem Gegenstück 18, insbesondere Dichtring, am Grundkörper 8b gebildet. Zusätzlich oder alternativ ist, wie im vorliegenden Ausführungsbeispiel, bei einem Typ von Schaltstellungen, insbesondere beim Typ "Überlaststellung", also in einer Überlaststellung, die Engstelle 16 des Fluidkanals 11 ein Ringraum 19 zwischen dem Ventilkörper 15, hier einem angefasten Materialabschnitt 20, und dem Gegenstück 18 am Grundkörper 8b, hier dem Dichtring. Ein Ringraum 19 ist in diesem Zusammenhang ein vollständig umlaufender Freiraum, der von dem Fluid durchströmbar ist.

Die Engstelle 16 des Fluidkanals 11 wird also in jeder der genannten Schaltstellungen des Ventilkörpers 15 an einem anderen Abschnitt, beispielsweise Nutabschnitt 17a, 17b oder angefasten Materialabschnitt 20, des Ventilkörpers 15 gebildet.

Gemäß einer alternativen, hier nicht dargestellten Ausführungsform kann auch vorgesehen sein, dass im Grundkörper 8b je Fluidkanal 11 eine Nut 17 ausgebildet ist, wobei dann vorzugsweise die Engstelle 16 des Fluidkanals 11 bei einem oder mehreren Typen von Schaltstellungen, insbesondere beim Typ "Verengungsstellung" und/oder "Offenstellung", also in einer Verengungsstellung und/oder Offenstellung, zwischen jeweils einem Nutabschnitt 17a, 17b der Nut 17 und einem Gegenstück 18, insbesondere Dichtring, am Ventilkörper 15 gebildet wird. In diesem Fall kann zusätzlich oder alternativ vorgesehen sein, dass bei einem Typ von Schaltstellungen, insbesondere beim Typ "Überlaststellung", also in einer Überlaststellung, die Engstelle des Fluidkanals 11 ein Ringraum 19 zwischen dem Grundkörper 8b und dem Gegenstück 18 am Ventilkörper 15 ist.

Wie am besten in Fig. 3a) zu erkennen ist, weist hier und vorzugsweise die Nut 17 einen ersten Nutabschnitt 17a mit einem größeren Querschnitt und/oder einer größeren Tiefe und/oder Breite und daran anschließend einen zweiten Nutabschnitt 17b mit einem kleineren Querschnitt und/oder einer kleineren Tiefe und/oder Breite auf. Hier und vorzugsweise mündet dabei der zweite Nutabschnitt 17b in einen umlaufend angefasten oder vertieften Materialabschnitt 20. Alternativ kann, was hier nicht dargestellt ist, auch vorgesehen sein, dass der zweite Nutabschnitt 17b in einen dritten Nutabschnitt mündet, der einen größeren Querschnitt und/oder eine größere Tiefe und/oder Breite als der erst und/oder zweite Nutabschnitt 17a, 17b aufweist.

Hier und vorzugsweise ist wie gesagt, der Ventilkörper 15 dasjenige Bauteil, das zur Bildung des jeweiligen Fluidkanals 11 mit einer Nut 17 versehen ist. Entsprechend ist auch der hier angefaste Materialabschnitt 20 Teil des Ventilkörpers 15.

Ein angefaster Materialabschnitt 20 ist ein Abschnitt des Ventilkörpers 15, in dem sich die äußere Oberfläche des Ventilkörpers 15 nicht parallel zur Bewegungsachse des Ventilkörpers 15, die hier koaxial zur Zylinderachse A verläuft, erstreckt, sondern schräg dazu. In diesem angefasten Materialabschnitt 20 verringert sich daher der Querschnitt des Ventilkörpers 15, und zwar nicht nur wie bei einer Nut 17 in einem schmalen Umfangssegment, sondern über einen größeren Umfangsbereich und vorzugsweise über den vollständigen Umfang. Der hiermit durchströmbare Raum ist daher in Umfangsrichtung gesehen größer als bei einer Nut 17. Auf diese Weise wird, wie Fig. 3c) zeigt, ein im Vergleich zu einer Nut 17 erheblich größerer durchströmbarer Querschnitt der Überströmkanalanordnung 9 erreicht. Vorzugsweise wird dadurch in der Überlaststellung zwischen dem umlaufend angefasten Materialabschnitt 20 und dem Gegenstück 18, hier dem Dichtring, besagter Ringraum 19 ausgebildet.

Derselbe Effekt wie mit einem umlaufend angefasten Materialabschnitt 20 lässt sich auch mit einem umlaufend vertieften Materialabschnitt (nicht dargestellt) erzielen.

An dieser Stelle sei nochmals hervorgehoben, dass hier als bevorzugte Ausführungsform der Ventilkörper 15 die jeweilige Nut 17 und den angefasten Materialabschnitt 20 aufweist. Dies kann aber auch gemäß einer anderen, hier nicht dargestellten Ausführungsform am Grundkörper 8b vorgesehen sein, wobei dann wie gesagt das jeweilige Gegenstück 18 bzw. der Dichtring am Ventilkörper 15 vorzusehen wäre.

Wie die Fig. 3 zeigt, ist hier und vorzugsweise der erste Nutabschnitt 17a zu dem Teilraum 7b hin angeordnet, in dem, wenn die beiden Antriebsanschlüsse 4a, 4b zusammengetrieben werden, das Fluid den niedrigeren Druck hat. Insbesondere mündet dieser erste Nutabschnitt 17a in den Teilraum 7b. Der zweite Nutabschnitt 17b schließt sich dann daran zu dem Teilraum 7a hin an. Der Teilraum 7a ist dabei der Teilraum, in dem, wenn die beiden Antriebsanschlüsse 4a, 4b zusammengetrieben werden, das Fluid den höheren Druck hat.

Die Begriffe "kleiner" und "größer" oder "niedriger" und "höher" sind hier immer aufeinander bezogen, das heißt beispielsweise, dass der "kleinere" Querschnitt kleiner als der "größere" Querschnitt ist oder dass der "niedrigere" Druck kleiner als der "höhere" Druck ist.

Die Fig. 3a), 3b) und 3c) veranschaulichen, in dieser Reihenfolge, dass zunächst im Offenzustand der Nutabschnitt 17a zusammen mit dem Gegenstück 18 bzw. Dichtring den Querschnitt bildet, der zum Ausgleich des Druckgefälles zwischen den beiden Teilräumen 7a, 7b von dem Fluid durchströmt wird. Erhöht sich nun das Druckgefälle, wird der Ventilkörper 15 durch den erhöhten Druck im Teilraum 7a in Richtung des Teilraums 7b gedrückt, wodurch dann der Verengungszustand erreicht wird. In dem Verengungszustand bildet dann der Nutabschnitt 17b zusammen mit dem Gegenstück 18 bzw. Dichtring den Querschnitt, der dann zum Ausgleich des Druckgefälles zwischen den beiden Teilräumen 7a, 7b von dem Fluid durchströmt wird. Erhöht sich das Druckgefälle noch weiter, wird der Ventilkörper 15 durch den erhöhten Druck im Teilraum 7a noch weiter in Richtung des Teilraums 7b gedrückt, wodurch dann der Überlastzustand erreicht wird. In dem Überlastzustand bildet dann der angefaste Materialabschnitt 20 zusammen mit dem Gegenstück 18 bzw. Dichtring den hier ringförmigen Querschnitt, der dann zum Ausgleich des Druckgefälles zwischen den beiden Teilräumen 7a, 7b von dem Fluid durchströmt wird.

Wie Fig. 3 und Fig. 4 zeigen, ist der Ventilkörper 15 hier kraftbeaufschlagt, wenn dieser aus seiner Ausgangsstellung heraus, die er im Ruhezustand des Gasdruckelements 4 inne hat, ausgelenkt ist. Dafür ist hier und vorzugsweise eine Ventilfederanordnung 21 mit mindestens einer Ventilfeder 22 vorgesehen, wobei die Ventilfederanordnung 21 bzw. die mindestens eine Ventilfeder 22 mit dem Ventilkörper 15 hier so zusammenwirkt, dass dieser aus seiner Ausgangsstellung heraus gegenüber dem Grundkörper 8b federkraftbeaufschlagt ist, und zwar vorzugsweise zu seiner mindestens einen Offenstellung bzw. Ausgangsstellung hin.

Verschiedene Varianten der Ventilfederanordnung 21 sind in Fig. 4a) bis c) dargestellt. Fig. 4a) entspricht dabei der Variante, die auch in Fig. 3a) bis c) gezeigt ist. Die gezeigten Varianten unterscheiden sich in der Position der mindestens einen Ventilfeder 22 innerhalb der Ventilanordnung 10.

Gemäß Fig. 3 bzw. 4a) ist eine Ventilfeder 22, die hier und vorzugsweise die einzige Ventilfeder 22 der Ventilfederanordnung 21 ist, auf der zum unteren Teilraum 7b des Zylinderinnenraums 7 weisenden Seite, insbesondere Stirnseite, des Ventilkörpers 15 angeordnet. Die Ventilfeder 22 stützt sich hier und vorzugsweise einerends am Grundkörper 8b oder der Kolbenstange 8a, hier einem radial nach innen vorspringenden Abschnitt 23, und andererends am Ventilkörper 15, hier der zum unteren Teilraum 7b des Zylinderinnenraums 7 weisenden Seite, insbesondere Stirnseite, des Ventilkörpers 15, ab. Die Ventilfeder 22 ist dabei hier und vorzugsweise über zumindest einen Teil ihrer axialen Erstreckung, vorzugsweise den größten Teil ihrer axialen Erstreckung, weiter vorzugsweise ihre gesamte axiale Erstreckung, radial von dem Grundkörper 8b umgeben.

Gemäß Fig. 4b) und Fig. 4c) ragt ein axialer Abschnitt 24 des Ventilkörpers 15 axial aus dem Grundkörper 8b in den oberen Teilraum 7a des Zylinderinnenraums 7. Dieser Abschnitt 24 weist, beabstandet zum Grundkörper 8b, insbesondere wie hier an seinem vom Grundkörper 8b wegweisenden Ende, eine radiale Erweiterung 25 auf, die eine axiale Anlage für eine Ventilfeder 22, die hier und vorzugsweise die einzige Ventilfeder 22 der Ventilfederanordnung 21 ist, bildet. Die Ventilfeder 22 ist hier und vorzugsweise auf der zum oberen Teilraum 7a des Zylinderinnenraums 7 weisenden Seite, insbesondere Stirnseite, des Grundkörpers 8b angeordnet und/oder umgibt den Ventilkörper 15 radial, insbesondere über ihre gesamte axiale Erstreckung. Die Ventilfeder 22 stützt sich hier und vorzugsweise einerends am Grundkörper 8b, hier seiner Stirnseite, und andererends am Ventilkörper 15, hier der radialen Erweiterung 25 des Ventilkörpers 15, ab. Die Ventilfeder 22 ist dabei hier und vorzugsweise über zumindest einen Teil ihrer axialen Erstreckung, vorzugsweise den größten Teil ihrer axialen Erstreckung, weiter vorzugsweise ihre gesamte axiale Erstreckung, axial außerhalb des Grundkörper 8b angeordnet.

Grundsätzlich ist auch eine Kombination der obigen Varianten dahingehend denkbar, dass die Ventilfederanordnung 21 mindestens zwei Ventilfedern 22 aufweist. Eine Ventilfeder 22 ist dann wie in Fig. 3 bzw. 4a) auf der zum unteren Teilraum 7b des Zylinderinnenraums 7 weisenden Seite, insbesondere Stirnseite, des Ventilkörpers 15 angeordnet und stützt sich vorzugsweise einerends am Grundkörper 8b oder der Kolbenstange 8a, insbesondere einem radial nach innen vorspringenden Abschnitt 23, und andererends am Ventilkörper 15, insbesondere der zum unteren Teilraum 7b des Zylinderinnenraums 7 weisenden Seite, insbesondere Stirnseite, des Ventilkörpers 15, ab. Eine weitere Ventilfeder 22 ist dann wie in Fig. 4b) bzw. 4c) auf der zum oberen Teilraum 7a des Zylinderinnenraums 7 weisenden Seite, insbesondere Stirnseite, des Grundkörpers 8b angeordnet und/oder umgibt den Ventilkörper 15 radial, insbesondere über ihre gesamte axiale Erstreckung. Diese weitere Ventilfeder 22 stützt sich vorzugsweise einerends am Grundkörper 8b, insbesondere seiner Stirnseite, und andererends am Ventilkörper 15, insbesondere der radialen Erweiterung 25 des Ventilkörpers 15, ab.

Die radiale Erweiterung 25 kann auf verschiedene Weise gebildet sein. Gemäß Fig. 4b) wird diese von einer Schraubenmutter 25a, die auf den Ventilkörper 15, insbesondere endseitig, aufgeschraubt ist, gebildet. Hier und vorzugsweise ist noch eine Unterlegscheibe 25b Bestandteil der radialen Erweiterung 25. Schraubenmutter 25a und/oder Unterlegscheibe 25b ragen dabei in die axiale Projektion des Federmaterials, insbesondere Federdrahts, der Ventilfeder 22, sodass diese an der Schraubenmutter 25a oder wie hier an der Unterlegscheibe 25b axial anliegen kann. Gemäß Fig. 4c) wird die radiale Erweiterung 25 durch radiales Aufweiten des Materials des Ventilkörpers 15, insbesondere an seinem vom Grundkörper 8b wegweisenden Ende, gebildet. Das aufgeweitete Material des Ventilkörpers 15 ragt dabei in die axiale Projektion des Federmaterials, insbesondere Federdrahts, der Ventilfeder 22, sodass diese an dem aufgeweiteten Material axial anliegen kann.

Der Ventilkörper 15 ist in Fig. 3 bzw. 4a) sowie auch in Fig. 4b) und in Fig. 4c) jeweils nach links zur Kolbenstange 8a auslenkbar und entsprechend zumindest im ausgelenkten Zustand nach rechts zu seiner mindestens einen Offenstellung hin von der Ventilfederanordnung 21 federkraftbeaufschlagt. Im Ruhezustand und im Normalbetrieb des Gasdruckelements 4 nimmt damit die Ventilanordnung 10 hier immer den Offenzustand ein. Grundsätzlich kann der Ventilkörper 15 im Offenzustand der Ventilanordnung 10 federkraftfrei oder federkraftbeaufschlagt sein.

Wie zuvor angedeutet, sind in einer anderen, hier nicht dargestellten Ausführungsform die beschriebenen Schaltvorgänge auch zusätzlich oder alternativ in der entgegengesetzten Richtung denkbar. Der Ventilkörper 15 wäre dann aus seiner Ausgangsstellung heraus, die er im Ruhezustand des Gasdruckelements 4 inne hat, zusätzlich oder alternativ in die entgegengesetzte Richtung, hier von der Kolbenstange 8a weg, gegen eine Kraft, insbesondere gegen eine von der Ventilfederanordnung 21 bereitgestellte Federkraft, auslenkbar.

Jedenfalls ist es hier und vorzugsweise so, dass die jeweilige Ventilfeder 22 entsprechend dem Druckgefälle zwischen den beiden Teilräumen 7a, 7b komprimiert wird. Die Federkennlinie der jeweiligen Ventilfeder 22 ist dazu vorzugsweise so gewählt, dass abhängig von der Kolbengeschwindigkeit v der Ventilkörper 15 die Schaltstellung (Überlaststellung, Verengungsstellung, Offenstellung) einnimmt, die dem dann vorhandenen Druckgefälle jeweils entspricht. Insbesondere ist die Federkennlinie der jeweiligen Ventilfeder 22 dabei so gewählt, dass abhängig von der Kolbengeschwindigkeit v der Abschnitt des Ventilkörpers 15 dem Gegenstück 18 gegenüberliegt, der dem dann einzustellenden Schaltzustand (Überlastzustand, Verengungszustand, Offenzustand) entspricht, also beispielsweise im Überlastzustand der angefaste Materialabschnitt 20, im Verengungszustand der Nutabschnitt 17b und im Offenzustand der Nutabschnitt 17a.

Nach einer weiteren Lehre, der gemäß Anspruch 15 eigenständige Bedeutung zukommt, wird eine Antriebsanordnung 1 für eine Klappe 2, insbesondere Heckklappe, eines Kraftfahrzeugs, gegebenenfalls mit mindestens einem motorischen Antrieb 3, zumindest aber mit mindestens einem Gasdruckelement 4, insbesondere mit einer Gasfeder, beansprucht, wobei das Gasdruckelement 4 einen nach außen gedichteten Zylinder 6 und einen in dem Zylinderinnenraum 7 entlang der Zylinderachse A laufenden, den Zylinderinnenraum 7 in zwei Teilräume 7a, 7b unterteilenden Kolben 8 aufweist, wobei das Gasdruckelement 4 einen ersten Antriebsanschluss 4a, der mit dem Zylinder 6 verbunden ist, und einen zweiten Antriebsanschluss 4b, der mit dem Kolben 8 verbunden ist, aufweist, wobei der Zylinder 6 mit einem, insbesondere unter Druck stehenden, Fluid gefüllt ist, wobei der Kolben 8 eine Überströmkanalanordnung 9 aufweist, durch die auf eine Kolbenbewegung zum Ausgleich eines Druckgefälles zwischen den beiden Teilräumen 7a, 7b eine Ausgleichsströmung zwischen den beiden Teilräumen 7a, 7b entsteht, und wobei dem Kolben 8 eine schaltbare Ventilanordnung 10 zugeordnet ist, die abhängig vom Druckgefälle zwischen den beiden Teilräumen 7a, 7b in unterschiedliche Durchströmungszustände bringbar ist, die sich in der Größe des durchströmbaren Querschnitts der Überströmkanalanordnung 9 unterscheiden. Auf alle Ausführungen zu der vorschlagsgemäßen Antriebsanordnung 1 gemäß der ersten Lehre darf verwiesen werden.

Gemäß dieser Lehre ist vorgesehen, dass, insbesondere wenn die beiden Antriebsanschlüsse zusammengetrieben werden, die Ventilanordnung 10 bei Überschreiten eines vorbestimmten unteren Grenzwertes für das Druckgefälle selbsttätig von einem Offenzustand in einen Verengungszustand schaltet, in dem sie den Querschnitt der Überströmkanalanordnung 9 gegenüber dem Offenzustand verringert, und bei Überschreiten eines vorbestimmten oberen Grenzwertes für das Druckgefälle selbsttätig von dem Verengungszustand in einen Schließzustand schaltet, in dem sie den Querschnitt der Überströmkanalanordnung 9 gegenüber dem Verengungszustand verringert. Vorzugsweise ist es dabei so, dass der Querschnitt der Überströmkanalanordnung 9 nach Überschreiten des vorbestimmten oberen Grenzwertes für das Druckgefälle zumindest überwiegend, vorzugsweise vollständig, geschlossen wird, somit nicht mehr, jedenfalls nicht mehr nennenswert, durchströmbar ist.

Nach einer weiteren Lehre, der gemäß Anspruch 16 ebenfalls eigenständige Bedeutung zukommt. wird eine Klappenanordnung 5 mit einer Klappe 2, insbesondere einer Heccklappe, und mit einer vorschlagsgemäßen, der Klappe 2 zugeordneten Antriebsanordnung 1 beansprucht. Auf alle Ausführungen zu der vorschlagsgemäßen Antriebsanordnung 1 gemäß der ersten Lehre und gemäß der zweiten Lehre darf verwiesen werden.

Insbesondere handelt es sich dabei um eine Klappe 2, die um eine Schwenkachse X schwenkbar ist, die im montierten Zustand im Wesentlichen horizontal ausgerichtet ist. Gerade bei diesem Anwendungsfall ist, wie zuvor erläutert wurde, die vorschlagsgemäße Antriebsanordnung 1 besonders vorteilhaft einsetzbar. Dies gilt insbesondere für einen Fall, wie dieser zuvor erläutert wurde, bei dem insbesondere die Geschwindigkeit der Klappe 2 erhöht ist. Bei der vorschlagsgemäßen Klappenanordnung 5 ist ein solcher Fall insbesondere dadurch definiert, dass die Antriebskraft und/oder Haltekraft des Antriebs 3 ausfällt und dadurch die Klappe 2 federkraftbedingt und/oder gravitationsbedingt in Schließrichtung oder in Öffnungsrichtung drängt oder dass ein Benutzer die Klappe manuell schließt, wobei das dann bedingte Schalten der Ventilanordnung 10 in den Verengungszustand, wie dies gemäß der ersten und zweiten Lehre vorgesehen ist, und gegebenenfalls in den Schließzustand, wie dies gemäß der zweiten Lehre vorgesehen ist, einer weiteren Verstellung der Klappe 2 entgegenwirkt und insbesondere eine weitere Verstellung der Klappe 2 blockiert.

## Patentansprüche

1. Antriebsanordnung für eine Klappe (2), insbesondere Heckklappe, eines Kraftfahrzeugs mit mindestens einem Gasdruckelement (4), insbesondere mit einer Gasfeder, wobei das Gasdruckelement (4) einen nach außen gedichteten Zylinder (6) und einen in dem Zylinderinnenraum (7) entlang der Zylinderachse (A) laufenden, den Zylinderinnenraum (7) in zwei Teilräume (7a, 7b) unterteilenden Kolben (8) aufweist,
wobei das Gasdruckelement (4) einen ersten Antriebsanschluss (4a), der mit dem Zylinder (6) verbunden ist, und einen zweiten Antriebsanschluss (4b), der mit dem Kolben (8) verbunden ist, aufweist, wobei der Zylinder (6) mit einem, insbesondere unter Druck stehenden, Fluid gefüllt ist,
wobei der Kolben (8) eine Überströmkanalanordnung (9) aufweist, durch die auf eine Kolbenbewegung zum Ausgleich eines Druckgefälles zwischen den beiden Teilräumen (7a, 7b) eine Ausgleichsströmung zwischen den beiden Teilräumen (7a, 7b) entsteht, und
wobei dem Kolben (8) eine schaltbare Ventilanordnung (10) zugeordnet ist, die abhängig vom Druckgefälle zwischen den beiden Teilräumen (7a, 7b) in unterschiedliche Durchströmungszustände bringbar ist, die sich in der Größe des Querschnitts der Überströmkanalanordnung (9) unterscheiden,
**dadurch gekennzeichnet,**
**dass** aus einem Ruhezustand des Gasdruckelements (4) heraus, wobei dann kein Druckgefälle vorliegt, die Ventilanordnung (10) bei Überschreiten eines vorbestimmten unteren Grenzwertes für das Druckgefälle selbsttätig in einen Verengungszustand umschaltet, in dem sie den Querschnitt der Überströmkanalanordnung (9) verringert, insbesondere minimiert, und bei Überschreiten eines vorbestimmten oberen Grenzwertes für das Druckgefälle selbsttätig in einen Überlastzustand umschaltet, in dem sie den Querschnitt der Überströmkanalanordnung (9) vergrößert, insbesondere maximiert.

2. Antriebsanordnung nach Anspruch 1, **dadurch gekennzeichnet, dass** der Querschnitt der Überströmkanalanordnung (9) nach Überschreiten des vorbestimmten unteren Grenzwertes für das Druckgefälle und bis zum Erreichen des vorbestimmten oberen Grenzwertes für das Druckgefälle weiterhin geöffnet bleibt oder aber geschlossen wird.

3. Antriebsanordnung nach Anspruch 1 oder 2, **dadurch gekennzeichnet, dass** der untere Grenzwert für das Druckgefälle einer Kolbengeschwindigkeit (v) in einem Bereich von 15 mm/s bis 100 mm/s, vorzugsweise von 30 mm/s bis 80 mm/s, weiter vorzugsweise von 40 mm/s bis 60 mm/s, entspricht, und/oder, dass der obere Grenzwert für das Druckgefälle einer Kolbengeschwindigkeit (v) in einem Bereich von 25 mm/s bis 120 mm/s, vorzugsweise von 40 mm/s bis 100 mm/s, weiter vorzugsweise von 50 mm/s bis 80 mm/s, entspricht.

4. Antriebsanordnung nach einem der vorhergehenden Ansprüche, **dadurch gekennzeichnet, dass** die Ventilanordnung (10) im Normalbetrieb des Gasdruckelements (4) einen Offenzustand inne hat, in dem die Überströmkanalanordnung (9) einen Querschnitt hat, der größer als im Verengungszustand und/oder kleiner als im Überlastzustand ist, und/oder, dass die Ventilanordnung (10) bei ansteigendem Druckgefälle selbsttätig von einem Offenzustand, in dem die Überströmkanalanordnung (9) einen Querschnitt hat, der größer als im Verengungszustand und/oder kleiner als im Überlastzustand ist, insbesondere über den Verengungszustand, in den Überlastzustand umschalten kann.

5. Antriebsanordnung nach einem der vorhergehenden Ansprüche, **dadurch gekennzeichnet, dass** die Ventilanordnung (10) bei Unterschreiten des vorbestimmten oberen Grenzwertes für das Druckgefälle selbsttätig aus dem Überlastzustand in den Verengungszustand umschaltet, und/oder, dass die Ventilanordnung (10) bei Unterschreiten des vorbestimmten unteren Grenzwertes für das Druckgefälle selbsttätig aus dem Verengungszustand in den Offenzustand umschaltet.

6. Antriebsanordnung nach einem der vorhergehenden Ansprüche, **dadurch gekennzeichnet, dass** das Gasdruckelement (4) eine Antriebsfederanordnung (12) aufweist, die mindestens eine erste Schraubenfeder (13), insbesondere Schraubendruckfeder oder -zugfeder, die vorzugsweise parallel oder koaxial zu dem Zylinder (6), diesen insbesondere radial umgebend, angeordnet ist, und/oder mindestens eine zweite Schraubenfeder (14), insbesondere Schraubendruckfeder oder -zugfeder, die vorzugsweise parallel oder koaxial zu dem Zylinder (6), von diesem insbesondere radial umschlossen, angeordnet ist, aufweist.

7. Antriebsanordnung nach einem der vorhergehenden Ansprüche, **dadurch gekennzeichnet, dass** die Ventilanordnung (10) so ausgelegt ist, dass, gegebenenfalls unterstützt durch die Antriebsfederanordnung (12), wenn die beiden Antriebsanschlüsse (4a, 4b) zusammengetrieben werden, im Überlastzustand das Druckgefälle, insbesondere schlagartig, verringert werden kann, bis der vorbestimmte obere Grenzwert für das Druckgefälle wieder unterschritten wird, sodass die Ventilanordnung (10) selbsttätig in den Verengungszustand umschaltet.

8. Antriebsanordnung nach Anspruch 6 oder 7, **dadurch gekennzeichnet, dass** die Antriebsfederanordnung (12) so ausgelegt ist, dass ihre Federkraft mit einer Verringerung des Abstands der beiden Antriebsanschlüsse (4a, 4b) zueinander ansteigt, vorzugsweise derart, dass bei einer Schließbewegung der Klappe (2) eine Verringerung des kürzesten senkrechten Abstands zwischen der Schwenkachse (X) der Klappe (2) und der Wirkungslinie der Federkraft, aus der das auf die Klappe (2) ausgeübte Moment resultiert, zumindest zum Teil, vorzugsweise vollständig, kompensiert wird.

9. Antriebsanordnung nach einem der vorhergehenden Ansprüche, **dadurch gekennzeichnet, dass** der Kolben (8) eine Kolbenstange (8a) und einen an der Kolbenstange (8a) befestigten Grundkörper (8b) aufweist, und dass die Ventilanordnung (10) einen zum Grundkörper (8b) beweglichen Ventilkörper (15) aufweist, der insbesondere innerhalb des Grundkörpers (8b) angeordnet ist, und dass die Überströmkanalanordnung (9) zwischen dem Grundkörper (8b) und dem Ventilkörper (15) ausgebildet ist.

10. Antriebsanordnung nach Anspruch 9, **dadurch gekennzeichnet, dass** der Ventilkörper (15) gegenüber dem Grundkörper (8b) des Kolbens (8) in mehrere Schaltstellungen umfassend mindestens eine Offenstellung, in der die Ventilanordnung (10) den Offenzustand inne hat, mindestens eine Verengungsstellung, in der die Ventilanordnung (10) den Verengungszustand inne hat, und/oder mindestens eine Überlaststellung, in der die Ventilanordnung (10) den Überlastzustand inne hat, verstellbar ist.

11. Antriebsanordnung nach einem der vorhergehenden Ansprüche 9 oder 10, **dadurch gekennzeichnet, dass** die Überströmkanalanordnung (9) einen oder mehrere Fluidkanäle (11) aufweist, die zur fluidtechnischen Verbindung zwischen den beiden Teilräumen (7a, 7b) dienen und zwischen dem Grundkörper (8b) und dem Ventilkörper (15) verlaufen, dass in einem oder mehreren der Fluidkanäle (11) eine Engstelle (16) vorgesehen oder erzeugbar ist, die den kleinsten Querschnitt des Fluidkanals (11) definiert, der von der Ausgleichsströmung durchströmbar ist, und dass sich der jeweilige Querschnitt mindestens einer Engstelle (16) oder aller Engstellen (16) und/oder der Gesamtquerschnitt aller Engstellen (16) abhängig von der Schaltstellung des Ventilkörpers (15) gegenüber dem Grundkörper (8b) des Kolbens (8) ändert.

12. Antriebsanordnung nach Anspruch 11, **dadurch gekennzeichnet, dass** im Ventilkörper (15) je Fluidkanal (11) eine Nut (17) ausgebildet ist, vorzugsweise, dass die Engstelle (16) des Fluidkanals (11) bei einem oder mehreren Typen von Schaltstellungen, insbesondere in einer Verengungsstellung und/oder Offenstellung, zwischen jeweils einem Nutabschnitt (17a, 17b) der Nut (17) und einem Gegenstück (18), insbesondere Dichtring, am Grundkörper (8b) gebildet wird, und/oder, dass bei einem Typ von Schaltstellungen, insbesondere in einer Überlaststellung, die Engstelle (16) des Fluidkanals (11) ein Ringraum (19) zwischen dem Ventilkörper (15) und einem Gegenstück (18), insbesondere Dichtring, am Grundkörper (8b) ist, und/oder,
dass im Grundkörper (8b) je Fluidkanal (11) eine Nut (17) ausgebildet ist, vorzugsweise, dass die Engstelle (16) des Fluidkanals (11) bei einem oder mehreren Typen von Schaltstellungen, insbesondere in einer Verengungsstellung und/oder Offenstellung, zwischen jeweils einem Nutabschnitt (17a, 17b) der Nut (17) und einem Gegenstück (18), insbesondere Dichtring, am Ventilkörper (15) gebildet wird, und/oder, dass bei einem Typ von Schaltstellungen, insbesondere in einer Überlaststellung, die Engstelle (16) des Fluidkanals (11) ein Ringraum (19) zwischen dem Grundkörper (8b) und einem Gegenstück (18), insbesondere Dichtring, am Ventilkörper (15) ist.

13. Antriebsanordnung nach Anspruch 12, **dadurch gekennzeichnet dass** die Nut (17) einen ersten Nutabschnitt (17a) mit einem größeren Querschnitt und/oder einer größeren Tiefe und/oder Breite und daran anschließend einen zweiten Nutabschnitt (17b) mit einem kleineren Querschnitt und/oder einer kleineren Tiefe und/oder Breite aufweist, vorzugsweise, dass der zweite Nutabschnitt (17b) in einen umlaufend angefasten oder vertieften Materialabschnitt (20) oder in einen dritten Nutabschnitt, der einen größeren Querschnitt und/oder eine größere Tiefe und/oder Breite als der erste und/oder zweite Nutabschnitt (17b) aufweist, mündet, vorzugsweise, dass in der Überlaststellung zwischen dem umlaufend angefasten oder vertieften Materialabschnitt (20) und dem Gegenstück (18) der Ringraum (19) ausgebildet ist.

14. Antriebsanordnung nach einem der vorhergehenden Ansprüche 11 oder 12, sowie optional zusätzlich einem der weiteren vorhergehenden Ansprüche, **dadurch gekennzeichnet, dass** der Ventilkörper (15), insbesondere über eine Ventilfederanordnung (21) mit mindestens einer Ventilfeder (22), gegenüber dem Grundkörper (8b) jedenfalls in seiner mindestens einen Verengungsstellung und Überlaststellung kraftbeaufschlagt ist, vorzugsweise zu seiner mindestens einen Offenstellung hin, vorzugsweise, dass eine Ventilfeder (22) auf der zum unteren Teilraum (7b) des Zylinderinnenraums (7) weisenden Seite des Ventilkörpers (15) angeordnet ist und sich vorzugsweise einerends am Grundkörper (8b) oder der Kolbenstange (8a) und andererends am Ventilkörper (15) abstützt, und/oder, dass eine Ventilfeder (22) auf der zum oberen Teilraum (7a) des Zylinderinnenraums (7) weisenden Seite des Grundkörpers (8b) angeordnet ist und/oder den Ventilkörper (15) radial umgibt und sich vorzugsweise einerends am Grundkörper (8b) und andererends am Ventilkörper 15, insbesondere einer radialen Erweiterung (25) des Ventilkörpers (15), abstützt.

15. Antriebsanordnung für eine Klappe (2), insbesondere Heckklappe, eines Kraftfahrzeugs mit mindestens einem Gasdruckelement (4), insbesondere mit einer Gasfeder, wobei das Gasdruckelement (4) einen nach außen gedichteten Zylinder (6) und einen in dem Zylinderinnenraum (7) entlang der Zylinderachse (A) laufenden, den Zylinderinnenraum (7) in zwei Teilräume (7a, 7b) unterteilenden Kolben (8) aufweist,
wobei das Gasdruckelement (4) einen ersten Antriebsanschluss (4a), der mit dem Zylinder (6) verbunden ist, und einen zweiten Antriebsanschluss (4b), der mit dem Kolben (8) verbunden ist, aufweist, wobei der Zylinder (6) mit einem, insbesondere unter Druck stehenden, Fluid gefüllt ist,
wobei der Kolben (8) eine Überströmkanalanordnung (9) aufweist, durch die auf eine Kolbenbewegung zum Ausgleich eines Druckgefälles zwischen den beiden Teilräumen (7a, 7b) eine Ausgleichsströmung zwischen den beiden Teilräumen (7a, 7b) entsteht, und
wobei dem Kolben (8) eine schaltbare Ventilanordnung (10) zugeordnet ist, die abhängig vom Druckgefälle zwischen den beiden Teilräumen (7a, 7b) in unterschiedliche Durchströmungszustände bringbar ist, die sich in der Größe des Querschnitts der Überströmkanalanordnung (9) unterscheiden,
**dadurch gekennzeichnet,**
**dass** aus einem Ruhezustand des Gasdruckelements (4) heraus, wobei dann kein Druckgefälle vorliegt, die Ventilanordnung (10) bei Überschreiten eines vorbestimmten unteren Grenzwertes für das Druckgefälle selbsttätig von einem Offenzustand in einen Verengungszustand umschaltet, in dem sie den Querschnitt der Überströmkanalanordnung (9) gegenüber dem Offenzustand verringert, und bei Überschreiten eines vorbestimmten oberen Grenzwertes für das Druckgefälle selbsttätig von dem Verengungszustand in einen Schließzustand umschaltet, in dem sie den Querschnitt der Überströmkanalanordnung (9) gegenüber dem Verengungszustand verringert.

16. Klappenanordnung mit einer Klappe (2), insbesondere Heckklappe, und einer der Klappe (2) zugeordneten Antriebsanordnung (1) nach einem der vorhergehenden Ansprüche.

## Claims

1. Drive assembly for a hatch (2), in particular rear hatch, of a motor vehicle, having at least one gas pressure element (4), in particular having a gas spring, wherein the gas pressure element (4) has an externally sealed cylinder (6) and a piston (8) which in the cylinder interior space (7) runs along the cylinder axis (A) and sub-divides the cylinder interior space (7) into two sub-spaces (7a, 7b),
wherein the gas pressure element (4) has a first drive connector (4a) which is connected to the cylinder (6), and a second drive connector (4b) which is connected to the piston (8), wherein the cylinder (6) is filled with an in particular pressurized fluid, wherein the piston (8) has an overflow duct assembly (9) by way of which, in response to a piston movement, a balancing flow between the two sub-spaces (7a, 7b) for balancing a pressure gradient between the two sub-spaces (7a, 7a) is created, and wherein the piston (8) is assigned a switchable valve assembly (10) which, as a function of the pressure gradient between the two sub-spaces (7a, 7b), can be brought to different throughflow states which differ in terms of the size of the cross section of the overflow duct assembly (9),
**characterized in that**
proceeding from a resting state of the gas pressure element (4), in which instance there is no pressure gradient present, the valve assembly (10), when exceeding a predetermined lower limit value for the pressure gradient, switches in a self-acting manner to a constriction state in which said valve assembly (10) decreases, in particular minimizes, the cross section of the overflow duct assembly (9), and when exceeding a predetermined upper limit value for the pressure gradient switches in a self-acting manner to an overload state in which said valve assembly (10) enlarges, in particular maximizes, the cross section of the overflow duct assembly (9).

2. Drive assembly according to Claim 1, **characterized in that** the cross section of the overflow duct assembly (9), upon exceeding the predetermined lower limit value for the pressure gradient and until reaching the predetermined upper limit value for the pressure gradient, continues to remain open or else is closed.

3. Drive assembly according to Claim 1 or 2, **characterized in that** the lower limit value for the pressure gradient corresponds to a piston velocity (v) in a range from 15 mm/s to 100 mm/s, preferably from 30 mm/s to 80 mm/s, furthermore preferably from 40 mm/s to 60 mm/s, and/or **in that** the upper limit value for the pressure gradient corresponds to a piston velocity (v) in a range from 25 mm/s to 120 mm/s, preferably from 40 mm/s to 100 mm/s, furthermore preferably from 50 mm/s to 80 mm/s.

4. Drive assembly according to one of the preceding claims, **characterized in that** the valve assembly (10) during normal operation of the gas pressure element (4) assumes an open state in which the overflow duct assembly (9) has a cross section that is larger than in the constriction state and/or smaller than in the overload state, and/or **in that** the valve assembly (10) during a rising pressure gradient can switch in a self-acting manner from an open state in which the overflow duct assembly (9) has a cross section that is larger than in the constriction state and/or smaller than in the overload state, in particular can switch from the constriction state to the overload state.

5. Drive assembly according to one of the preceding claims, **characterized in that** the valve assembly (10) when undershooting the predetermined upper limit value for the pressure gradient switches in a self-acting manner from the overload state to the constriction state, and/or **in that** the valve assembly (10) when undershooting the predetermined lower limit value for the pressure gradient switches in a self-acting manner from the constriction state to the open state.

6. Drive assembly according to one of the preceding claims, **characterized in that** the gas pressure element (4) has a drive spring assembly (12) which has at least one first coil spring (13), in particular coil compression spring or coil tension spring, which is preferably disposed so as to be parallel to or coaxial with the cylinder (6), in particular radially surrounding the latter, and/or at least one second coil spring (14), in particular coil compression spring or coil tension spring, which is preferably disposed so as to be parallel to or coaxial with the cylinder (6), in particular radially enclosed by the latter.

7. Drive assembly according to one of the preceding claims, **characterized in that** the valve assembly (10) is conceived such that, optionally assisted by the drive spring assembly (12), when the two drive connectors (4a, 4b) are converged, in the overload state the pressure gradient can be reduced, in particular abruptly, until the predetermined upper limit value for the pressure gradient is undershot again such that the valve assembly (10) switches in a self-acting manner to the constriction state.

8. Drive assembly according to Claim 6 or 7, **characterized in that** the drive spring assembly (12) is conceived such that the spring force thereof increases as the mutual spacing of the two drive connectors (4a, 4b) decreases, preferably in such a manner that during a closing movement of the hatch (2) a decrease of the shortest perpendicular spacing between the pivot axis (X) of the flap (2) and the effective line of the spring force, from which the moment acting on the hatch (2) results, is at last partially, preferably completely compensated.

9. Drive assembly according to one of the preceding claims, **characterized in that** the piston (8) has a piston rod (8a) and a main body (8b) fastened to the piston rod (8a), and **in that** the valve assembly (10) has a valve body (15) which is movable relative to the main body (8b) and is in particular disposed within the main body (8b), and **in that** the overflow duct assembly (9) is configured between the main body (8b) and the valve body (15).

10. Drive assembly according to Claim 9, **characterized in that** the valve body (15) in relation to the main body (8b) of the piston (8) is adjustable to a plurality of switch positions, comprising at least one open position in which the valve assembly (10) assumes the open state, at least one constriction position in which the valve assembly (10) assumes the constriction state, and/or at least one overload position in which the valve assembly (10) assumes the overload state.

11. Drive assembly according to one of the preceding Claims 9 and 10, **characterized in that** the overflow duct assembly (9) comprises one or a plurality of fluid ducts (11) which serve for fluidically connecting the two sub-spaces (7a, 7b) and run between the main body (8b) and the valve body (15), **in that** provided or able to be generated in one or a plurality of the fluid ducts (11) is a bottleneck (16) which defines the smallest cross section of the fluid duct (11) that is able to be passed through by the balancing flow, and **in that** the respective cross section of at least one bottleneck (16) or of all bottlenecks (16), and/or the overall cross section of all bottlenecks (16), varies as a function of the switch position of the valve body (15) in relation to the main body (8b) of the piston (8).

12. Drive assembly according to Claim 11, **characterized in that** in the valve body (15) one groove (17) is configured for each fluid duct (11), preferably **in that** the bottleneck (16) of the fluid duct (11) in one or a plurality of types of switch positions, in particular in a constriction position and/or open position, is formed in each case between a groove portion (17a, 17b) of the groove (17) and a mating part (18), in particular an annular seal, on the main body (8b), and/or **in that** in one type of switch positions, in particular in an overload position, the bottleneck (16) of the fluid duct (11) is an annular space (19) between the valve body (15) and a mating part (18), in particular an annular seal, on the main body (8b), and/or
**in that** in the main body (8b) one groove (17) is configured for each fluid duct (11), preferably **in that** the bottleneck (16) of the fluid duct (11) in one or a plurality of types of switch positions, in particular in a constriction position and/or open position, is formed in each case between a groove portion (17a, 17b) of the groove (17) and a mating part (18), in particular an annular seal, on the valve body (15), and/or **in that** in one type of switch positions, in particular in an overload position, the bottleneck (16) of the fluid duct (11) is an annular space (19) between the main body (8b) and a mating part (18), in particular an annular seal, on the valve body (15).

13. Drive assembly according to Claim 12, **characterized in that** the groove (17) has a first groove portion (17a) having a larger cross section and/or a larger depth and/or width, and adjoining thereto a second groove portion (17b) having a smaller cross section and/or a smaller depth and/or width, preferably **in that** the second groove portion (17b) opens into a material portion (20) that is chamfered or recessed in an encircling manner, or into a third groove portion which has a larger cross section and/or a larger depth and/or width than the first and/or the second groove portion (17b), preferably **in that** in the overload position the annular space (19) is configured between the material portion (20) that is chamfered or recessed in an encircling manner and the mating part (18).

14. Drive assembly according to one of the preceding Claims 11 and 12, and also optionally additionally one of the further preceding claims, **characterized in that** the valve body (15), in particular by way of a valve spring assembly (21) having at least one valve spring (22), in any case in the at least one constriction position and overload position thereof, is impinged with a force in relation to the main body (8b), preferably toward the at least one open position thereof, preferably **in that** a valve spring (22) is disposed on the side of the valve body (15) that points toward the lower sub-space (7b) of the cylinder interior space (7) and is preferably supported on the main body (8b) or the piston rod (8a), on the one hand, and on the valve body (15), on the other hand, and/or **in that** a valve spring (22) is disposed on the side of the main body (8b) that points toward the upper sub-space (7a) of the cylinder interior space (7), and/or radially surrounds the valve body (15) and is preferably supported on the main body (8b), on the one hand, and on the valve body (15), on the other hand, in particular on a radial enlargement (25) of the valve body (15).

15. Drive assembly for a hatch (2), in particular rear hatch, of a motor vehicle, having at least one gas pressure element (4), in particular having a gas spring, wherein the gas pressure element (4) has an externally sealed cylinder (6) and a piston (8) which in the cylinder interior space (7) runs along the cylinder axis (A) and sub-divides the cylinder interior space (7) into two sub-spaces (7a, 7b),
wherein the gas pressure element (4) has a first drive connector (4a) which is connected to the cylinder (6), and a second drive connector (4b) which is connected to the piston (8), wherein the cylinder (6) is filled with an in particular pressurized fluid, wherein the piston (8) has an overflow duct assembly (9) by way of which, in response to a piston movement, a balancing flow between the two sub-spaces (7a, 7b) for balancing a pressure gradient between the two sub-spaces (7a, 7a) is created, and wherein the piston (8) is assigned a switchable valve assembly (10) which, as a function of the pressure gradient between the two sub-spaces (7a, 7b), can be brought to different throughflow states which differ in terms of the size of the cross section of the overflow duct assembly (9),
**characterized in that**
proceeding from a resting state of the gas pressure element (4), in which instance there is no pressure gradient present, the valve assembly (10) when exceeding a predetermined lower limit value for the pressure gradient switches in a self-acting manner from an open state to a constriction state **in that** said valve assembly (10) reduces the cross section of the overflow duct assembly (9) in relation to the open state, and when exceeding a predetermined upper limit value for the pressure gradient switches in a self-acting manner from the constriction state to a closed state **in that** said valve assembly (10) decreases the cross section of the overflow duct assembly (9) in relation to the constriction state.

16. Hatch assembly having a hatch (2), in particular a rear hatch, and a drive assembly (1) according to one of the preceding claims which is assigned to the hatch (2).

## Revendications

1. Dispositif d'entraînement pour un volet (2), en particulier un hayon arrière, d'un véhicule automobile, comprenant au moins un élément à pression de gaz (4), en particulier un ressort à gaz, l'élément à pression de gaz (4) comprenant un cylindre (6) étanche vers l'extérieur et un piston (8) qui s'étend dans l'espace intérieur (7) du cylindre le long de l'axe (A) du cylindre et qui divise l'espace intérieur du cylindre (7) en deux sous-espaces (7a, 7b),
l'élément à pression de gaz (4) présentant un premier raccord d'entraînement (4a) relié au cylindre (6) et un deuxième raccord d'entraînement (4b) relié au piston (8), le cylindre (6) étant rempli d'un fluide, en particulier d'un fluide sous pression,
le piston (8) présentant un agencement (9) de canal/canaux de passage à travers lequel, lors d'un mouvement du piston destiné à compenser une différence de pression entre les deux sous-espaces (7a, 7b), un flux de compensation s'établit entre les deux sous-espaces (7a, 7b), et
un agencement de soupape (10) commutable étant associé au piston (8), lequel agencement de soupape est apte à être amené, en fonction de la différence de pression entre les deux sous-espaces (7a, 7b), dans différents états de passage qui diffèrent par la taille de la section transversale de l'agencement (9) de canal/canaux de passage,
**caractérisé**
**en ce que**, à partir d'un état de repos de l'élément à pression de gaz (4), dans lequel il n'y a alors pas de chute de pression, l'agencement de soupape (10) passe automatiquement, lorsqu'une valeur limite inférieure prédéfinie pour la chute de pression est dépassée, dans un état de rétrécissement dans lequel il réduit la section transversale de l'agencement (9) de canal/canaux de passage, en particulier minimise cette section, et, lorsqu'une valeur limite supérieure prédéfinie pour la chute de pression est dépassée, passe automatiquement dans un état de surcharge dans lequel il augmente la section transversale de l'agencement (9) de canal/canaux de passage, en particulier maximise cette section.

2. Dispositif d'entraînement selon la revendication 1, **caractérisé en ce que** la section transversale de l'agencement (9) de canal/canaux de passage reste ouverte ou est fermée après dépassement de la valeur limite inférieure prédéfinie pour la chute de pression et jusqu'à atteinte de la valeur limite supérieure prédéfinie pour la chute de pression.

3. Dispositif d'entraînement selon la revendication 1 ou la revendication 2, **caractérisé en ce que** la valeur limite inférieure pour la chute de pression correspond à une vitesse de piston (v) comprise dans une gamme allant de 15mm/s à 100mm/s, de préférence de 30mm/s à 80mm/s, et, de manière encore préférée, de 40mm/s à 60mm/s, et/ou **en ce que** la valeur limite supérieure pour la chute de pression correspond à une vitesse de piston (v) comprise dans une gamme allant de 25mm/s à 120mm/s, de préférence de 40mm/s à 100mm/s, et, de manière encore préférée, de 50mm/s à 80mm/s.

4. Dispositif d'entraînement selon l'une des revendications précédentes, **caractérisé en ce que** l'agencement de soupape (10) présente, en fonctionnement normal de l'élément à pression de gaz (4), un état d'ouverture dans lequel l'agencement (9) de canal/canaux de passage a une section transversale qui est plus grande qu'à l'état de rétrécissement et/ou plus petite qu'à l'état de surcharge, et/ou **en ce que** l'agencement de soupape (10), lorsque la chute de pression augmente, est apte à passer automatiquement d'un état d'ouverture, dans lequel l'agencement (9) de canal/canaux de passage présente une section transversale qui est supérieure à celle dans l'état de rétrécissement et/ou inférieure à celle dans l'état de surcharge, en particulier en passant par l'état de rétrécissement, à l'état de surcharge.

5. Dispositif d'entraînement selon l'une des revendications précédentes, **caractérisé en ce que** l'agencement de soupape (10) passe automatiquement de l'état de surcharge à l'état de rétrécissement lorsque la chute de pression passe en dessous de la valeur limite supérieure prédéfinie, et/ou **en ce que** l'agencement de soupape (10) passe automatiquement de l'état de rétrécissement à l'état d'ouverture lorsque la valeur limite inférieure prédéfinie pour la chute de pression est dépassée.

6. Dispositif d'entraînement selon l'une des revendications précédentes, **caractérisé en ce que** l'élément à pression de gaz (4) comprend un agencement (12) à ressort d'entraînement qui comprend au moins un premier ressort hélicoïdal (13), en particulier un ressort hélicoïdal de compression ou de traction, qui est de préférence parallèle ou coaxial au cylindre (6) en particulier l'entourant radialement, et/ou au moins un deuxième ressort hélicoïdal (14), en particulier un ressort hélicoïdal de compression ou de traction, qui est de préférence agencé parallèlement ou coaxialement au cylindre (6), en particulier entouré radialement par celui-ci.

7. Dispositif d'entraînement selon l'une des revendications précédentes, **caractérisé en ce que** l'agencement de soupape (10) est conçu de telle sorte que, le cas échéant avec l'aide du dispositif de ressort d'entraînement (12), lorsque les deux raccords d'entraînement (4a, 4b) sont assemblés, la chute de pression peut être réduite, en particulier brusquement, en cas de surcharge, jusqu'à ce que la valeur limite supérieure prédéfinie pour la chute de pression soit à nouveau dépassée, de sorte que l'agencement de soupape (10) passe automatiquement à l'état de rétrécissement.

8. Dispositif d'entraînement selon la revendication 6 ou la revendication 7, **caractérisé en ce que** l'agencement (12) à ressort d'entraînement est conçu de telle sorte que sa force élastique augmente avec une réduction de la distance entre les deux raccords d'entraînement (4a, 4b), de préférence de telle sorte que, lors d'un mouvement de fermeture du volet (2), une réduction de la distance perpendiculaire la plus courte entre l'axe de pivotement (X) du volet (2) et la ligne d'action de la force du ressort, qui résulte du moment exercé sur le volet (2), soit au moins partiellement, de préférence entièrement, compensée.

9. Dispositif d'entraînement selon l'une des revendications précédentes, **caractérisé en ce que** le piston (8) comprend une tige de piston (8a) et un corps de base (8b) fixé à la tige de piston (8a), et **en ce que** l'agencement de soupape (10) comprend un corps de soupape (15) mobile par rapport au corps de base (8b), qui est notamment agencé à l'intérieur du corps de base (8b), et **en ce que** l'agencement (9) de canal/canaux de passage est formé entre le corps de base (8b) et le corps de soupape (15).

10. Dispositif d'entraînement selon la revendication 9, **caractérisé en ce que** le corps de soupape (15) est apte à être déplacé par rapport au corps de base (8b) du piston (8) dans une pluralité de positions de commutation comprenant au moins une position d'ouverture dans laquelle l'agencement de soupape (10) est à l'état d'ouverture, au moins une position de rétrécissement dans laquelle l'agencement de soupape (10) est à l'état de rétrécissement, et/ou au moins une position de surcharge, dans laquelle l'agencement de soupape (10) se trouve à l'état de surcharge.

11. Dispositif d'entraînement selon l'une des revendications 9 ou 10 précédentes, **caractérisé en ce que** l'agencement (9) de canal/canaux de passage comprend un ou plusieurs canaux de fluide (11) qui servent à la liaison fluidique entre les deux sous-espaces (7a, 7b) et s'étendent entre le corps de base (8b) et le corps de soupape (15), **en ce qu'**un rétrécissement (16) est prévu ou est apte à être créé dans un ou plusieurs des canaux de fluide (11), qui définit la plus petite section transversale du canal de fluide (11) qui est apte à être traversé par le flux de compensation, et **en ce que** la section transversale respective d'au moins un rétrécissement (16) ou de tous les rétrécissements (16) et/ou la section transversale totale de tous les rétrécissements (16) varie en fonction de la position de commutation du corps de soupape (15) par rapport au corps de base (8b) du piston (8).

12. Dispositif d'entraînement selon la revendication 11, **caractérisé en ce qu'**une rainure (17) est formée dans le corps de soupape (15) pour chaque canal de fluide (11), de préférence **en ce que** le rétrécissement (16) du canal de fluide (11) est formé, dans un ou plusieurs types de positions de commutation, en particulier dans une position de rétrécissement et/ou une position d'ouverture, entre une partie de rainure (17a, 17b) de la rainure (17) et une contre-pièce (18), en particulier une bague d'étanchéité, sur le corps de base (8b), et/ou **en ce que**, dans un type de positions de commutation, en particulier dans une position de surcharge, le rétrécissement (16) du canal de fluide (11) est un espace annulaire (19) entre le corps de soupape (15) et une contre-pièce (18), en particulier une bague d'étanchéité, sur le corps de base (8b), et/ou **en ce que**, dans le corps de base (8b), est formée une rainure (17) pour chaque canal de fluide (11), de préférence **en ce que** le rétrécissement (16) du canal de fluide (11) est formé, dans un ou plusieurs types de positions de commutation, en particulier dans une position de rétrécissement et/ou une position d'ouverture, entre respectivement une partie de rainure (17a, 17b) de la rainure (17) et une contre-pièce (18), en particulier une bague d'étanchéité, sur le corps de soupape (15), et/ou **en ce que** dans un type de positions de commutation, en particulier dans une position de surcharge, le rétrécissement (16) du canal de fluide (11) forme un espace annulaire (19) entre le corps de base (8b) et une contre-pièce (18), en particulier une bague d'étanchéité, sur le corps de soupape (15).

13. Dispositif d'entraînement selon la revendication 12, **caractérisé en ce que** la rainure (17) présente une première partie de rainure (17a) avec une section transversale plus grande et/ou une profondeur et/ou une largeur plus grande, suivie d'une deuxième partie de rainure (17b) avec une section transversale plus petite et/ou une profondeur et/ou une largeur plus petite, de préférence **en ce que** la deuxième partie de rainure (17b) débouche dans une partie de matériau (20) chanfreinée ou creusée sur tout le pourtour ou dans une troisième partie de rainure qui présente une section transversale et/ou une profondeur et/ou une largeur plus grande que la première et/ou la deuxième partie de rainure (17b), de préférence **en ce que**, en position de surcharge, l'espace annulaire (19) est formé entre la partie de matériau chanfreinée ou creusée (20) et la contre-pièce (18).

14. Dispositif d'entraînement selon l'une des revendications précédentes 11 ou 12, ainsi que, en option, l'une des autres revendications précédentes, **caractérisé en ce que** le corps de soupape (15), en particulier par l'intermédiaire d'un dispositif à ressort de soupape (21) avec au moins un ressort de soupape (22), est soumis à une force par rapport au corps de base (8b) au moins dans sa position de rétrécissement et sa position de surcharge, de préférence vers sa position d'ouverture, de préférence **en ce qu'**un ressort de soupape (22) est agencé sur le côté du corps de soupape (15) tourné vers le sous-espace inférieur (7b) de l'espace intérieur du cylindre (7) et s'appuie de préférence à une extrémité sur le corps de base (8b) ou la tige de piston (8a) et à l'autre extrémité sur le corps de soupape (15), et/ou **en ce qu'**un ressort de soupape (22) est agencé sur le côté du corps de base (8b) tourné vers le sous-espace supérieur (7a) de l'espace intérieur du cylindre (7) et/ou entoure radialement le corps de soupape (15) et s'appuie de préférence à une extrémité sur le corps de base (8b) et à l'autre extrémité sur le corps de soupape (15), en particulier sur un élargissement radial (25) du corps de soupape (15).

15. Dispositif d'entraînement pour un volet (2), en particulier un hayon arrière, d'un véhicule automobile, comprenant au moins un élément à pression de gaz (4), en particulier un ressort à gaz, l'élément à pression de gaz (4) comprenant un cylindre (6) étanche vers l'extérieur et un piston (8) qui s'étend dans l'espace intérieur (7) du cylindre le long de l'axe (A) du cylindre et qui divise l'espace intérieur du cylindre (7) en deux sous-espaces (7a, 7b),
l'élément à pression de gaz (4) présentant un premier raccord d'entraînement (4a) relié au cylindre (6) et un deuxième raccord d'entraînement (4b) relié au piston (8), le cylindre (6) étant rempli d'un fluide, en particulier d'un fluide sous pression,
le piston (8) présentant un agencement (9) de canal/canaux de passage à travers lequel, lors d'un mouvement du piston destiné à compenser une différence de pression entre les deux sous-espaces (7a, 7b), un flux de compensation s'établit entre les deux sous-espaces (7a, 7b), et
un agencement de soupape (10) commutable étant associé au piston (8), lequel agencement de soupape est apte à être amené, en fonction de la différence de pression entre les deux sous-espaces (7a, 7b), dans différents états de passage qui diffèrent par la taille de la section transversale de l'agencement (9) de canal/canaux de passage,
**caractérisé**
**en ce qu'**à partir d'un état de repos de l'élément à pression de gaz (4), dans lequel il n'y a alors aucune chute de pression, l'agencement de soupape (10) passe automatiquement d'un état d'ouverture à un état de rétrécissement lorsqu'une valeur limite inférieure prédéfinie pour la chute de pression est dépassée, dans lequel il réduit la section transversale de l'agencement (9) de canal/canaux de passage par rapport à l'état d'ouverture, et, lorsqu'une valeur limite supérieure prédéfinie pour la chute de pression est dépassée, passe automatiquement de l'état de rétrécissement à un état de fermeture dans lequel il réduit la section transversale de l'agencement (9) de canal/canaux de passage par rapport à l'état de rétrécissement.

16. Dispositif à volet comprenant un volet (2), en particulier un hayon, et un dispositif d'entraînement (1) associé au volet (2) selon l'une des revendications précédentes.
